(19) **Europäisches Patentamt / European Patent Office / Office européen des brevets**

(11) **EP 1 935 245 A1**

(12) # EUROPEAN PATENT APPLICATION
published in accordance with Art. 153(4) EPC

(43) Date of publication:
**25.06.2008 Bulletin 2008/26**

(21) Application number: **06810179.9**

(22) Date of filing: **15.09.2006**

(51) Int Cl.:
***A01N 25/00*** (2006.01)　　***A01C 1/06*** (2006.01)
***A01N 63/00*** (2006.01)

(86) International application number:
**PCT/JP2006/318337**

(87) International publication number:
**WO 2007/032458 (22.03.2007 Gazette 2007/12)**

(84) Designated Contracting States:
**FR NL**

(30) Priority: **16.09.2005　JP 2005270616**
**16.09.2005　JP 2005271020**

(71) Applicants:
• **Sakata Seed Corporation**
**Yokohama-shi,**
**Kanagawa 2240041 (JP)**
• **Hyogo Prefecture**
**Kobe-shi, Hyogo, 6500011 (JP)**

(72) Inventors:
• **KOBAYASHI, Takeshi**
**Yokohama-shi Kanagawa　2240041 (JP)**

• **HASHIMOTO, Yoshihiro**
**Yokohama-shi Kanagawa 2240041 (JP)**
• **TAKEBAYASHI, Kenji**
**Yokohama-shi Kanagawa 2240041 (JP)**
• **AINO, Masataka**
**Nhshi-ku, Kobe yogo 6512226 (JP)**

(74) Representative: **Denison, Christopher Marcus et al**
**Mewburn Ellis LLP**
**York House**
**23 Kingsway**
**London WC2B 6HP (GB)**

(54) **SEED COATED WITH ANTAGONISTIC MICROORGANISM, METHOD OF PRODUCING THE SAME AND METHOD OF PROTECTING CROP FROM DISEASES**

(57)　　An object of the present invention is to provide seeds coated with an antagonistic microorganism, which have high-level disease control effects and high preservation stability. The present invention makes it possible to drastically elevate the survival percentage of an antagonistic microorganism in seeds coated with the antagonistic microorganism by vacuum inoculating seeds with the antagonistic microorganism, drying seeds inoculated with the antagonistic microorganism under low-temperature, low-humidity conditions, or a combination of these methods.

EP 1 935 245 A1

## Description

Technical Field

The present invention relates to a seed coated with an antagonistic microorganism, a method for producing the seed, and a disease control method for a crop.

Background Art

In modern agriculture, it is clear that the use of agricultural chemicals and fertilizers has drastically increase crop productivity. Furthermore, disease control systems that make use of agricultural chemicals have been established, and thus the continuous mono-culture with high production efficiency is increasingly performed. However, injury resulting from mono-culture production, and particularly, the occurrence of soil diseases, is an important issue in production of intensive acriculture that makes use of chemical fertilizers and agricultural chemicals. The total amount of damage due to soil diseases is estimated to reach as high as one trillion yen, even only within Japan. The amount of agricultural chemicals used therefor is increasing yearly. However, the effects of chemical fertilizers and chemical pesticides on human health and the environment are becoming problems. Hence, efforts are underway to reduce the amounts of fertilizers and agricultural chemicals used. One such effort is the development of biocontrol technology that makes use of antagonistic microorganisms (Use of Microorganisms as Materials *(Biseibutsu-no-shizaika):* the Frontiers of Research, (2000), Ed., by Takahito Suzui et al., Softscience Ltd. and Annual Review of Phytopathology, 31 (1993), 53-80). To date, bacteria of the genus *Bacillus,* bacteria of the genus *Pseudomonas,* bacteria of the genus nonpathogenic *Erwinia,* actinomycetes of the genus *Streptomyces,* fungi of the genus nonpathogenic *Fusarium,* fungi of the genus *Trichoderma,* fungi of the genus *Gliocladium,* fungi of the genus *Penicillium,* fungi of the genus *Talaromyces,* fungi of the genus *Pythium,* and the like have been isolated and the disease control effects thereof have been confirmed. However, such biocontrol technology has not yet been disseminated widely. One reason for this is the high production cost of microbial materials. Thus, the use of such microbial materials for wide agricultural fields is not economical and the effects of the microbial materials are unstable in spite of their high production cost. Therefore, to obtain more stable effects even with the use of a smaller amount of an antagonistic microorganism, the use of such antagonistic microorganism at the stage at which seedlings are raised within cells has also been examined (JP Patent Publication (Kokai) No. 9-308372 A (1997) and JP Patent Publication (Kokai) No. 11-335217 A (1999)). Moreover, methods for coating seeds have been devised as simple methods using the least possible amounts of such antagonistic microorganisms (JP Patent Publication (Kokai) No. 10-203917 A (1998), JP Patent Publication (Kokai) No. 11-4606 A (1999), and Annals of the Phytopathological Society of Japan, Vol. 68, No. 2, p. 240). However, when seeds are treated with an antagonistic microorganism, dry and storage conditions for seeds often conflict with survival conditions for the antagonistic microorganism, so that the survival percentage of the antagonistic microorganism tends to drop. As disease control methods for seeds, methods that involve treating seeds with effective microorganisms having an antagonistic nature against pathogens have been reported (JP Patent Publication (Kokai) No. 2001-346407 A and JP Patent Publication (Kokai) No. 2002-003322 A). According to such methods, disinfection is first performed by physical and chemical techniques to lower the level of carried microbes that cause seed-borne diseases, and then seeds are treated with effective microorganisms. Several methods for such treatment have been developed, which involve inoculating seeds with microorganisms via immersion and then performing ventilation drying, for example. In all of these methods, sowing must be performed substantially after the treatment without performing storage of the seeds. Therefore, such treatment does not practically allow long-term preservation stability, so that it is difficult to apply such methods for commercial use. Thus, such methods have not yet been practically used. Furthermore, the reason for this may be because the results of pot tests are reproduced with difficulty on-site in the soil of various fields.

Furthermore, Grassland Science, The Japanese Society of Grassland Science, Vol. 42, No. 1, April, P. 7 to 12, "Preservation Method and Nodulation of Seeds Coated (Inoculated) with Alfalfa Root Nodule Bacteria*"* and Grassland Science, The Japanese Society of Grassland Science, Vol. 44, No. 1, April, P. 1 to 6, *"Nodule Occupancies by Inoculum Strains Used for Lime-Coating and Vacuum Processing Inoculations of Red Clover (Trifolium pratense L.) Seeds"* disclose an attempt of adsorption of *Rhizobium meliloti* root nodule bacteria that are useful (and not antagonistic) microorganisms, to alfalfa seeds under reduced pressure conditions. However, significant reduction in viable cell count and lowered nodulating ability have been observed at low temperatures and particularly at room temperature, in the case of seeds to which root nodule bacteria have been vacuum-adsorbed (Grassland Science, The Japanese Society of Grassland Science, Vol. 42, No. 1, April, P. 7 to 12, "Preservation Method and Nodulation of Seeds Coated (Inoculated) with Alfalfa Root Nodule Bacteria*"* and Grassland Science, The Japanese Society of Grassland Science, Vol. 44, No. 1, April, P. 1 to 6, "Nodule Occupancies by Inoculum Strains Used for Lime-Coating and Vacuum Processing Inoculations of Red Clover (Trifolium pratense L.) Seeds *"),* compared with seeds inoculated with root nodule bacteria via coating and the use of an adhesive agent. It has never been reported that technology of vacuum inoculating seeds with a useful microorganism is advantageous in view of preservation stability of a microorganism, for example.

Furthermore, a test (JP Patent No. 2885805) has been reported as a method for inoculating seeds with bacteria, which comprises drying an easily-flowable composition comprising a non-crosslinking polysaccharide and then causing the composition to come into contact with seeds. As a result, the survival of the bacteria within coated seeds has been confirmed within few days after inoculation. It is extremely difficult to achieve the long-term survival of bacteria within compositions with which such seeds are coated.

In the case of seeds such as lettuce seeds, the form of which requires pelletization (granulation), effective colonization of an antagonistic microorganism in seeds has been even more difficult. The reason for this is described below. Practical pelleted seed production comprises the steps of pelletization, selection of pellet size (pelleted seed diameter) and shape, and drying. Since heated air is applied in the drying step, endophytic bacteria easily die because of heating and drying. Furthermore, endophytic bacteria tend to die even during storage periods ranging from after production of pelleted seeds to the sowing thereof.

Development of seeds coated with an antagonistic microorganism that have high-level disease control effects and high preservation stability has been desired as described above, but no practical technology has been developed.

Patent Document 1: JP Patent Publication (Kokai) No. 9-308372 A (1997)
Patent Document 2: JP Patent Publication (Kokai) No. 11-335217 A (1999)
Patent Document 3: JP Patent Publication (Kokai) No. 10-203917 A (1998)
Patent Document 4: JP Patent Publication (Kokai) No. 11-4606 A (1999)
Patent Document 5: JP Patent Publication (Kokai) No. 2001-346407 A
Patent Document 6: JP Patent Publication (Kokai) No. 2002-003322 A
Patent Document 7: JP Patent Publication (Kokai) No. 2003-34607 A
Patent Document 8: JP Patent Publication (Kokai) No. 8-268826 A (1996)
Patent Document 9: JP Patent Publication (Kokai) No. 7-163334 A (1995)
Patent Document 10: JP Patent No. 2885805
Non-patent Document 1: Use of Microorganisms as Materials (Biseibutsu-no-shizaika): the Frontiers of Research, (2000), Ed., by Takahito Suzui et al., Softscience Ltd.
Non-patent Document 2: Annual Review of Phytopathology, 31 (1993), 53-80
Non-patent Document 3: Annals of the Phytopathological Society of Japan, Vol. 68, No. 2, p. 240
Non-patent Document 4: Grassland Science, The Japanese Society of Grassland Science, Vol. 42, No. 1, April, P. 7 to 12, "Preservation Method and Nodulation of Seeds Coated (Inoculated) with Alfalfa Root Nodule Bacteria"
Non-patent Document 5: Grassland Science, The Japanese Society of Grassland Science, Vol. 44, No. 1, April, P. 1 to 6, "Nodule Occupancies by Inoculum Strains Used for Lime-Coating and Vacuum Processing Inoculations of Red Clover (Trifolium pratense L.) Seeds"

Disclosure of the Invention

Object of the Invention

An object of the present invention is to provide seeds coated with an antagonistic microorganism that have high-level disease control effects and high preservation stability.

Means for Attaining the Object

To attain the above object, the present inventors have examined a method for stably introducing an antagonistic microorganism into seeds, preservation stability, and disease control effects of such seeds.

As a result, the present inventors have surprisingly discovered that the survival percentage of an antagonistic microorganism existing in seeds coated with the antagonistic microorganism can be drastically increased by vacuum inoculating the seeds with the antagonistic microorganism, drying the seeds inoculated with the antagonistic microorganism under low-temperature, low-humidity conditions, or performing a combination of the two. The present inventors have also discovered that the method is effective for seeds such as lettuce seeds that require pelletization. Specifically, the present inventors have discovered that the survival percentage of an antagonistic microorganism that exists in seeds coated with the antagonistic microorganism can be drastically increased by vacuum inoculating the seeds with the antagonistic microorganism (before the step of pelletization of such seeds), drying the seeds not via conventional ventilation drying with heating but under low-temperature, low-humidity conditions (after the step of pelletization of the seeds coated with the antagonistic microorganism), or performing a combination of the two. Furthermore, the present inventors have discovered that the thus produced seeds coated with an antagonistic microorganism can grow without problems in terms of sowing and germination and have high protection value against soil diseases of crops. The phenomenon that has been confirmed for the first time by the present inventors can be explained as described below, for example.

EP 1 935 245 A1

An antagonistic microorganism can be introduced into the inside of the epidermis of a seed with the use of a vacuum inoculation method. Unlike the case of a dried seed surface, water with which a seed can survive is retained inside of the epidermis (internal portion) of a seed. An antagonistic microorganism that is introduced into the internal portion of the epidermis of a seed can survive using such water, so that it can be estimated that the survival percentage of the antagonistic microorganism is drastically increased. Moreover, after inoculation with an antagonistic microorganism, the seeds are dried under low-temperature, low-humidity conditions, so that the antagonistic microorganism becomes less damaged by temperature. Therefore, the survival percentage of the antagonistic microorganism is drastically increased.

The present inventors have further discovered that the thus produced seeds coated with an antagonistic microorganism can be stably preserved for a long term via storage under low-temperature and low-humidity conditions.

More specifically, the present invention encompasses the following inventions.

(1) A method for producing a seed coated with an antagonistic microorganism, in which a seed is vacuum-inoculated with an antagonistic microorganism.
(2) The method according to (1), in which after vacuum-inoculation of the seed with the antagonistic microorganism, the seed is dried under low-temperature, low-humidity conditions.
(3) A method for producing a seed coated with an antagonistic microorganism, comprising inoculating a seed with an antagonistic microorganism and then drying the seed under low-temperature, low-humidity conditions after inoculation.
(4) A seed coated with an antagonistic microorganism produced by the method according to any one of (1) to (3).
(5) A disease control method for a crop, in which a crop seed is vacuum-inoculated with an antagonistic microorganism.
(6) The method according to (5), in which, after vacuum inoculation of the crop seed with the antagonistic microorganism, the crop seed is dried under low-temperature, low-humidity conditions.
(7) A disease control method for a crop, comprising inoculating a crop seed with an antagonistic microorganism and then drying the seed under low-temperature, low-humidity conditions after inoculation.
(8) The method according to any one of (5) to (7), further comprising storing the crop seed inoculated with the antagonistic microorganism under low-temperature, low-humidity conditions during a period ranging from completion of drying to sowing.

In addition, in (8), "the crop seed inoculated with the antagonistic microorganism" means, when (8) is dependant on (5) or (6), "the crop seed vacuum-inoculated with the antagonistic microorganism."

Furthermore, (5) to (8) can comprise each step required for growing a crop from a seed, such as a step of sowing a seed that has been inoculated with an antagonistic microorganism and then dried.

In a typical embodiment of (1) to (8), the seed is a lettuce seed, the antagonistic microorganism is an endophytic bacterium exhibiting an antagonistic nature against fungi of the genus *Olpidium* that retains a lettuce big-vein virus, and the disease that should be controlled is lettuce big-vein disease. However, the embodiment is not limited thereto.

Effect of the Invention

The present invention provides a seed coated with an antagonistic microorganism having high-level disease control effects and high preservation stability, a method for producing the seed, and a disease control method for a crop that uses the seed coated with the antagonistic microorganism.

This description includes part or all of the contents as disclosed in the descriptions and/or drawings of Japanese Patent Application Nos. 2005-270616 and 2005-271020, which are priority documents of the present application.

Preferred Embodiments of the Invention

The present invention will be described in detail as follows.

In the present invention, "a seed coated with an antagonistic microorganism" refers to a seed that is coated with an antagonistic microorganism. Specifically, such seed may be a seed itself (untreated seed) or a seed subjected to various processings, such as a film-coated seed, a pelleted seed, a gel-coated seed, a seeder tape, a seed graph, a seed subjected to priming treatment, as long as the seed is coated with an antagonistic microorganism. Lettuce seeds and the like are generally processed into pelleted seeds by pelletization. The amount of microorganisms used for coating is not particularly limited and is generally contained within a range between $10^1$ cells/seed and $10^{10}$ cells/seed.

When seeds are subjected to pelletization (granulation), the pelletization step is not particularly limited, as long as pelletization is performed using a general pelletizer or the like. The pellet size that is at least slightly larger than that of seeds is applicable herein. The thickness of the thus pelletized layer may range from 1 nm to 50 mm. The pellet shape obtained after pelletization is preferably globular-shaped or rugby-ball-shaped, but is not particularly limited thereto. To perform selection based on pellet size (pelleted seed diameter) and pellet shape after pelletization is preferable to improve the efficiency of sowing.

Examples of seeds to be used in the present invention include, but are not particularly limited to, crop seeds such as seeds of the family Liliaceae such as onion and Allium, seeds of the family Chenopodiaceae such as spinach and beet, seeds of the family Brassicaceae such as cabbage, cauliflower, broccoli, and radish, seeds of the family Leguminosae such as fava bean and garden pea, seeds of the family Apiaceae such as carrot, celery, and honewort, seeds of the family Asteraceae such as lettuce, crown daisy, and burdock, seeds of the family Solanaceae such as tomato, eggplant, and bell pepper, seeds of the family Cucurbitaceae such as melon, cucumber, watermelon, and pumpkin, and seeds of the family Poaceae such as rice, corn, wheat, and barley; seeds of flowers and ornamental plants such as pansy, viola, petunia, *Eustoma grandiflroum,* stock, aster, cyclamen, primula, antirrhinum, zinnia, marigold, morning glory, sunflower, cosmea, ranunculus, lavender, lupine, mimulus, poppy, begonia, nemesia, vinca, torenia, delphinium, dianthus, geranium, globe amaranth, sweet pea, salvia, gerbera, gazania, calendula, gloxinia, celosia, impatiens, anemone, and ageratum, and other seeds such as seeds of feed crops, herbage, and turfgrass.

Examples of antagonistic microorganisms to be used in the present invention include, but are not particularly limited to, as long as they exert an antagonistic nature to plant pathogenic microorganisms, Gram-positive bacteria such as bacteria of the genus *Bacillus* and actinomycetes of the genus *Streptomyces,* Gram-negative bacteria such as bacteria of the genus *Pseudomonas,* nonpathogenic bacteria of the genus *Erwinia,* fungi such as nonpathogenic fungi of the genus *Fusarium,* fungi of the genus *Trichoderma,* fungi of the genus *Gliocladium,* fungi of the genus *Penicillium,* fungi of the genus *Talaromyces,* and fungi of the genus *Pythium.* Antagonistic endophytic bacteria are also included in these examples. Endophytic bacteria can be defined as bacteria that are capable of infecting and growing within plant bodies, but are unable to cause diseases in the plants and can be isolated from plants subjected to surface sterilization. Endophytic bacteria produce various physiologically active substances and plants infected with the endophytic bacteria can be resistant to diseases owing to their functions. One of such phenomena is induced systemic resistance that is induced by endophytic bacteria. In addition, it is obvious to persons skilled in the art that root nodule bacteria belonging to the genus *Rhizobium,* such as *Rhizobium trifolii* and *Rhizobium meliloti,* are useful microorganisms but are not antagonistic microorganisms. Specifically, "antagonistic microorganisms" in the present invention are those other than root nodule bacteria.

The following specific examples of antagonistic microorganisms are known. *Bacillus cereus* strain KI2N (FERM P-17147, JP Patent No. 3140430) exerts growth-suppressing effects against a plurality of fungi and has disease-suppressing effects against diseases such as damping-off of cucumber caused by *Rhizoctonia solani,* and the like. The *Bacillus subtilis* strain NCIB12376 (FERM P-14647, JP Patent No. 3554592) and strain NCIB12616 (FERM P-14646, JP Patent No. 3554592) exert disease control effects against many plant diseases including gray mold of vegetables, flowers and ornamental plants. Examples of bacteria of the genus *Pseudomonas* exerting disease control effects (Use of Microorganisms as Materials (Biseibutsu-no-shizaika): the Frontiers of Research, (2000), Ed., by Takahito Suzui et al., Softscience Ltd.) include the *Pseudomonas putida* strain FP-16 (the bacterial strain isolated from tomato root surfaces, which produces substances with antimicrobial activity against *Ralstonia solanacearum* and has effects of efficiently suppressing the development of bacterial wilt disease in the agricultural field), the *Pseudomonas fluorescence* strain FPH9601 (FERM BP-5479), and the *Pseudomonas fluorescence* strain FPT-9601 (FERM BP-5478) exerting tomato bacterial wilt disease control effects; the *Pseudomonas putida* strain HAI00377 (internationally deposited on August 28, 2006 under the Budapest Treaty with International Patent Organism Depositary, National Institute of Advanced Industrial Science and Technology, an Independent Administrative Institution, located at Tsukuba Central 6, 1-1-1 Higashi, Tsukuba, Ibaraki, Japan. The accession number is FERM BP-10666) (Use of Microorganisms as Materials (Biseibutsu-no-shizaika): the Frontiers of Research, (2000), Ed., by Takahito Suzui et al., Softscience Ltd.) exerting the clubroot control effects for the plants of the family *Brassicaceae;* the *Pseudomonas fluorescence* strain FPH9601 (FERM BP-5479) and *Pseudomonas fluorescence* strain FPT-9601 (FERM BP-5478) exerting the tomato bacterial wilt disease control effects; the *Pseudomonas* sp. strain FPH-2003 (internationally deposited with International Patent Organism Depositary, National Institute of Advanced Industrial Science and Technology, an Independent Administrative Institution. The accession number is FERM BP-10665 (the original deposition [FERM P-20654 domestically deposited on September 2, 2005] was transferred to an international deposition under the Budapest Treaty on August 18, 2006)); strain FPH-2005-1 (internationally deposited with International Patent Organism Depositary, National Institute of Advanced Industrial Science and Technology, an Independent Administrative Institution. The accession number is FERM BP-10664 (the original deposition [FERM P-20653 domestically deposited on September 2, 2005] was transferred to an international deposition under the Budapest Treaty on August 18, 2006)); and the *Pseudomonas* sp. strain CAB-02 (FERM P-15237, JP Patent No. 2884487) *(Momigenki* water dispersible powder as a bio-control agent) exerting rice bacterial disease control effects. *Streptomyces* sp. strain R-5 (FERM BP-7179, JP Patent No. 3629212) is effective for the disease control of the plants of the family Ericaceae. Furthermore, the *Trichoderma harzianum* strain SK5-5 (FERM P-13327, JP Patent No. 3046167) has been reported as a plant disease-controlling bacterium. The *Trichoderma harzianum* strain Kubota (trade name: *Haruzin* L) is known as having disease control effects against gray mold *(Gekkan Gendai Nogyo (monthly modern*

agriculture) September issue, 2003, P155-159, Rural Culture Association). The *Trichoderma atroviride* strain SKT-1 (FERM P-16510, JP Patent Publication (Kokai) No. 11-253151 A (1999)), strain SKT-2 (FERM P-16511, JP Patent Publication (Kokai) No. 11-253151 A (1999)), and strain SKT-3 (FERM P-17021, JP Patent Publication (Kokai) No. 11-253151 A (1999)) exert disease control effects against bacterial grain rot, bacterial seedling blight, and bacterial brown stripe. The nonpathogenic *Erwinia carotovora* strain CGE234M403 (FERM BP-4328, JP Patent No. 3040322) is effective for the disease control of soft rot, black rot, and bacterial seedling blight.

Furthermore, against lettuce big-vein disease, endophytic bacteria that exert an antagonistic nature against fungi of the genus *Olpidium* retaining the lettuce big-vein virus can be used as antagonistic microorganisms. The varieties of lettuce seeds are not particularly limited. Examples of such endophytic bacteria that exert an antagonistic nature against fungi of the genus *Olpidium* retaining the lettuce big-vein virus include, but are not particularly limited to, as long as they exert a predetermined antagonistic nature, the *Pseudomonas putida* strain FP-16 (the bacterial strain isolated from tomato root surfaces, which produces substances with antimicrobial activity against *Ralstonia solanacearum* and has effects of efficiently suppressing the development of bacterial wilt disease in the agricultural fields), the *Pseudomonas fluorescence* strain FPH9601 (FERM BP-5479), the *Pseudomonas putida* strain HAI00377 (FERM BP-10666), the *Pseudomonas (Pseudomonas* sp.) strain FPH-2003 (FERM BP-10665), and strain FPH-2005-1 (FERM BP-10664).

These antagonistic microorganisms can be screened for and isolated from seeds, plant bodies, soil, and the like and then used. Furthermore, streaking with such antagonistic microorganism is performed on the same medium that is streaked with a plant pathogenic microorganism to be controlled, so that they face each other or cross each other. They are cultured at optimum growth temperatures for the pathogenic microorganism for several days. The growth of both microorganisms is observed. Candidate bacteria that clearly suppress the growth of the pathogenic microorganism are selected as microorganisms having an antagonistic nature and can be used for the present invention (Method for Studying Plant Pathogenic Microorganisms (Shokubutsu Byogensei Biseibutsu Kenkyu-ho) (1993), under the supervision of Tetsu Wakimoto, Softscience Ltd.). Furthermore, to perform screening for antagonistic endophytic bacteria that exert disease control effects against the lettuce big-vein disease, seeds coated with candidate bacteria are seeded on soil contaminated with fungi of the genus *Olpidium* that transmit the lettuce big-vein virus, followed by several weeks of cultivation at optimum growth temperatures for fungi of the genus *Olpidium*. Candidate bacteria that clearly inhibit the infection of roots with fungi of the genus *Olpidium* are selected as endophytic bacteria having an antagonistic nature and can then be used for the present invention (The Phytopathological Society of Japan, Vol. 68, No. 2, p240). Regarding culture conditions for the antagonistic microorganisms of the present invention, conditions described in experimental protocols (New Edition Experimental Protocols for Soil Microorganisms (1997), edited by the Soil Microbiological Society of Japan, YOKENDO) and the like can be used. Regarding medium, for example, meat extract medium, LB medium, potato dextrose (PD) medium, 1/10 PD medium, King B agar medium, and the like are used. Regarding culture methods, for example, culture may be performed within a container such as a petri dish, a test tube, a flask, or a jar fermenter under conditions of static culture, shake culture, culture with agitation, or the like. Culture under special culture conditions is not required.

"Vacuum inoculation" in the present invention refers to a method for introducing an antagonistic microorganism to the inside of the epidermis of seeds by providing a closed container connected with an aspirator, placing seeds that have been mixed with and caused to come into contact with the antagonistic microorganism within the container, aspirating air within the container so as to create negative pressure conditions and to remove air from seed surfaces, and then returning the pressure to normal pressure (approximately 760 mmHg). An aspirator that is generally broadly used may be used herein. For example, an aspirator, a sucker, an oil rotary vacuum pump, and a dry vacuum pump can be used. Negative pressures that may be achieved herein are within a range that does not cause seeds and antagonistic microorganisms to die or does not damage cells substantially. For example, such negative pressure ranges from 1 mmHg to 755 mmHg, and preferably ranges from 100 mmHg to 700 mmHg (denoted with the degree of vacuum when the atmospheric pressure is determined to be 0 mmHg). The time required to reach the maximum negative pressure from normal pressure is not particularly limited and may range from 1 second to 120 minutes, for example. Moreover, the time during which microorganisms and seeds are placed under the maximum negative pressure conditions may range from 1 minute to 100 minutes. Subsequently, the pressure is returned to normal pressure. The time required for returning the pressure to normal pressure from negative pressure conditions may range from 1 second to 120 minutes. If such microorganisms and seeds are placed for a long time that is 120 minutes or longer under the maximum negative pressure conditions, unfavorable results may be caused since the survival percentage of the antagonistic microorganisms decreases and the germination percentage significantly decreases. Frequency of vacuum inoculation may range from 1 or more to 20 times. Repetition of vacuum inoculation may result in a higher introduction rate of antagonistic microorganisms introduced to seeds internally. However, excessive repetition of vacuum inoculation may damage the seeds or may result in lower germination percentages, for example. As such closed container, a closed system prepared by plugging a suction bottle or a pressure bottle with a rubber plug or sealing the same with a sealing tape can be used, for example. Shape, material, and the like for such closed system are not particularly limited, as long as such closed system can be maintained. Container size can be adequately selected according to the amounts of seeds and antagonistic microorganisms. For example, a container size can be selected from a range between 1 ml and 1000 m$^3$. Any connection part that links an aspirator and a closed container may be used herein, as long as the closed system can be maintained and such part is a pressure pipe that can withstand the negative pressure conditions. Furthermore, such connection part is not particularly limited, as long as it is made of materials that do not damage seeds or antagonistic microorganisms. If assembling of such system is difficult, an existing vacuum dry apparatus, a low temperature vacuum dry apparatus, a rotary evaporator, a lyophilizer, or the like can also be used.

Methods for mixing seeds with and thus causing the seeds to come into contact with antagonistic microorganisms for vacuum inoculation are not particularly limited, as long as they are generally employed methods. For example, seeds are immersed in a suspension containing an antagonistic microorganism, seeds are sprayed with a suspension containing an antagonistic microorganism, or seeds are placed in powder materials containing an antagonistic microorganism so as to coat the seeds with the powders. Agitation or mixing is preferably performed in order to increase the efficiency of causing contact between seeds and an antagonistic microorganism. However, care should be taken since excessive agitation and mixing can damage seeds.

The amount of an antagonistic microorganism that is used for inoculation of seeds is not particularly limited and may range from $10^1$ to $10^{10}$ cells/seed, for example.

The method for producing seeds coated with an antagonistic microorganism of the present invention more preferably comprise vacuum inoculating seeds with an antagonistic microorganism by the above method and then performing the step of drying the seeds under low-temperature, low-humidity conditions. Alternatively, the method for producing seeds coated with an antagonistic microorganism of the present invention may comprise inoculating seeds with an antagonistic microorganism by a method other than the above vacuum inoculation and then performing the step of drying the seeds under low-temperature, low-humidity conditions. In short, an embodiment of the present invention is a method for producing' seeds coated with an antagonistic microorganism, which comprises inoculating seeds with an antagonistic microorganism and then drying the seeds after inoculation; and relates to a method that comprises either inoculation of seeds with an antagonistic microorganism via vacuum inoculation or drying the seeds under low-temperature, low-humidity conditions, and preferably comprises both steps. Here, "(vacuum) inoculating seeds with an antagonistic microorganism and then drying the seeds under low-temperature, low-humidity conditions" encompasses any form, as long as the step of drying under low-temperature, low-humidity conditions is performed after inoculation of seeds with an antagonistic microorganism in terms of time. Specifically, in the present invention, the step of drying seeds under low-temperature, low-humidity conditions may be performed subsequent to inoculation of the seeds with an antagonistic microorganism; or subsequent to any additional treatment (e.g., pelletization or film-coating treatment) that is performed after inoculation of the seeds with the antagonistic microorganism. Examples of a method for inoculating seeds with an antagonistic microorganism, other than the vacuum inoculation method, include, but are not limited to, a method that involves immersing seeds in a suspension containing an antagonistic microorganism, a method that involves spraying seeds with a suspension containing an antagonistic microorganism, and a method that involves placing seeds in powder materials containing an antagonistic microorganism to coat seeds with the powders.

"Low-temperature, low-humidity conditions" for the step of drying seeds coated with an antagonistic microorganism in the present invention refers to conditions entailing a temperature (low temperature) of normal temperature (approximately 25°C) or less and a low humidity lower than room humidity, when room humidity ranges from 100% to 30%. More specifically, "low temperature" is a temperature that ranges from - 80°C or higher to normal temperature or lower. Within such low temperature range, particularly desirable temperatures range from -10°C or higher to 20°C or lower. "Low humidity" generally ranges from 0% or more to 80% or less. Within such low humidity range, low humidity particularly preferably ranges from 0% or more to 60% or less and more preferably ranges from 0% or more to 40% or less. Examples of methods for realizing low temperature include a method using a room with a cooling system or a container containing a cooling agent, a cooler box, a refrigerator, a freezer, or the like. Examples of methods for lowering humidity include a method that uses a chemical desiccating agent such as quicklime, a method that uses a physical desiccating agent such as silica gel, zeolite, or clay mineral, a method that involves circulating dry air or nitrogen gas, and a method that uses a dehumidifier or the like.

The moisture content percentage of dried seeds desirably ranges from 0.01% or more to 20% or less and more preferably ranges from 0.01% or more to 10% or less. When the moisture content percentage is higher than such range, problems occur such that the germination percentage of seeds decreases during storage or seed germination takes place during storage, and saprophytic microorganisms such as molds attach to seeds and proliferate, for example. In contrast, when the moisture content percentage is lower than such range, the survival percentage of microorganisms may decrease or the germination percentage of seeds may decrease.

Seeds coated with an antagonistic microorganism, which are produced according to the method of the present invention, are desirably stored under conditions that have the least impact on the viable cell count of the antagonistic microorganism, seed germination, and the like. Examples of such conditions include low-temperature, low-humidity conditions. "Low temperature" for storage conditions is preferably -80°C or higher and 30°C or lower and is more preferably 0°C or higher and 20°C or lower. Moreover, "low-humidity" for storage conditions is preferably 0% or more and 80% or less, is more preferably 0% or more and 60% or less, is further more preferably 0% or more and 50% or less, and is particularly preferably 0% or more and 40% or less.

Seeds coated with an antagonistic microorganism produced by the method of the present invention are seeded, so that diseases of crops and particularly soil diseases can be reduced and suppressed. Specifically, the present invention relates to a disease control method for crops with the use of seeds coated with an antagonistic microorganism. For example, seeds coated with an antagonistic microorganism are seeded, seedlings are raised, the seedlings are finally transplanted and cultivated in an agricultural field or pots containing soil contaminated with soil pathogenic microorganisms. Thus soil disease occurrence can be reduced and suppressed. In a specific example, lettuce seeds coated with an antagonistic endophytic bacterium are seeded, seedlings are raised, and then the seedlings are finally transplanted and cultivated in an agricultural field or pots containing soil contaminated with fungi of the genus *Olpidium* retaining the lettuce big-vein virus. Thus, the occurrence of the lettuce big-vein disease can be reduced and suppressed.

The disease control method of the present invention can be used in combination with another disease control method. Examples of such another disease control method include disinfection of soil for lowering cell concentration of soil pathogenic microorganisms, treatment with a drug, treatment with a soil improvement agent, and high ridge treatment. Furthermore, it is preferable to use seeds of a disease-resistant variety or seeds of a variety with disease tolerance as seeds to be coated with an antagonistic microorganism in order to further enhance the resulting disease control effects.

Examples

Hereafter, the present invention is described in greater detail with reference to the following examples, although the present invention is not limited to these examples. For example, the present invention can also be applied to seeds of vegetables, flowers and ornamental plants, cereals, forage crops, herbage, and turfgrass, other than the seeds that were used in the following Examples.

Reference example 1: Effects of the inoculation of film-coated cabbage seeds with Gram-positive bacteria *(Bacillus)* and drying of the seeds on the survival percentage of the bacteria and the germination percentage of the seeds

The gram-positive bacterium *(Bacillus. cereus)* strain KI2N was used as an antagonistic microorganism. The *Bacillus cereus* strain KI2N was provided by Kabushikikaisha Baiteku.

The *Bacillus cereus* strain KI2N was inoculated on a PD liquid medium, shake-cultured at 35°C for 2 days, and then collected using a centrifuge. The thus obtained strain was used as a source of inoculum.

5 ml of a binder solution prepared with polyvinyl alcohol was added to the thus collected *Bacillus cereus* strain KI2N. The strain KI2N was sufficiently dispersed using a rotator (agitator). The resultant was then sufficiently agitated while adding a small amount of the strain at a time to 100 g of cabbage seeds (variety: *Kinkei* 201, Sakata Seed Corporation). The seeds were placed in a hot-air ventilation dryer at 30°C and then dried for 24 hours.

Seeds of the same lot as that in Reference example 1 were film-coated using a binder solution containing no microorganism *(Bacillus cereus* strain KI2N) and then dried under the same conditions using the same method as above. The thus obtained seeds were used as control seeds.

The survival percentage of the *Bacillus cereus* strain KI2N in seeds was found by the following method. 100 seeds were suspended in 10 ml of sterilized water and then 1:10, 1:100, 1:1000, and 1:10000 diluted solutions were prepared. According to a dilution plate technique, these bacterial suspensions were spread on PDA agar media. Bacteria were cultured at 35°C for 3 days and then determination was performed based on the appearance of colonies. Furthermore, the germination percentage of seeds was confirmed by the following method. 150 seeds (50 seeds $\times$ 3 times (repeated 3 times)) of film-coated seeds were placed on filter paper caused to absorb deionized water, followed by 14 days of cultivation under 16 hours of dark conditions at 20°C and 8 hours of light conditions at 30°C. Plants for which the presence of hypocotyls and radicles had been confirmed were counted, and then the germination percentage was measured from such number.

The results of Reference example 1 are shown in Table 1. Decreases in seed germination percentage due to inoculation with the strain KI2N were not observed. The bacterial density in the case of seeds inoculated with the strain KI2N was $2.5 \times 10^4$ cfu/seed before drying. However, the bacterial density in the case of seeds inoculated and then dried at 30°C for 24 hours was $1.5 \times 10^2$ cfu/seed. It was demonstrated by Reference example 1 that when film-coated cabbage seeds were inoculated with a microorganism and then dried at 30°C for a long time, the survival percentage of the microorganism was 0.6% and the bacterial density decreased drastically. The result revealed the fact that it is extremely difficult to cause microorganisms to colonize in seeds at high concentrations via lengthy high-temperature drying following coating.

Table 1

Effects of inoculation of cabbage seeds (film-coated seeds) with Gram-positive bacteria *(Bacillus)* and drying on the survival percentage of the bacteria and the germination percentage of the seeds

| | Bacterial density (cfu/seed) of antagonistic microorganism | | Survival percentage (%) of antagonistic microorganism | Germination percentage (%) of seed |
|---|---|---|---|---|
| | Before drying | After drying | After drying | After drying |
| Reference example 1 | $2.5 \times 10^4$ | $1.5 \times 10^2$ | 0.6 | 96 |
| Control | - | - | - | 95 |

Example 1: Effects of vacuum inoculation of carrot seeds with Gram-negative bacteria (bacteria of the genus *Pseudomonas)* and drying under low-temperature, low-humidity conditions on the survival percentage of the bacteria and the germination percentage of <u>the seeds</u>

The Gram-negative bacterium *Pseudomonas putida* strain HAI00377 was used as an antagonistic microorganism.

The *Pseudomonas putida* strain HAI00377 was inoculated on a 9-cm petri dish containing King B agar medium, followed by 2 days of static culture at 25°C. The bacteria were collected using a spreader and then suspended in distilled water supplemented with 1/5000 Tween80. Viable cell count measured by a dilution plate technique was approximately $1 \times 10^{10}$ cfu/ml. 200 g of carrot seeds (variety: Beta 312, Sakata Seed Corporation) were wrapped with mesh and then added to a thin plastic case (that is usually used to contain strawberries for sale). A sinker was placed on the seeds so as to prevent the seeds from floating and thus to cause the seeds to sink down to the bottom, and then 300 ml of a bacterial suspension was poured into the case. For a vacuum inoculation method, negative pressure conditions were created using a compact air pump NUP-2 (produced by ASONE). The pump (exhaust) capacity was 12 1/min, pressure achieved was 300 mmHg, and the time required to create the maximum negative pressure conditions was approximately 2 minutes. The seeds were placed under the maximum negative pressure conditions for 5 minutes. The cock was gradually opened for a return to normal pressure. The time required to reach normal pressure again was approximately 20 seconds. To remove surplus water, ventilation drying was performed at 30°C for 1 hour using a constant-temperature dryer (MOV-212F) (produced by SANYO).

The thus obtained seeds coated with the antagonistic microorganism were further subjected to pelletization. The pelletization step is as explained below. All of the carrot seeds (approximately 200 g) that had been coated above were placed in a rotating pelletizing unit (produced by SEED PROCESSING). The seeds were sprayed with a binder for granulation (3.0% polyvinyl alcohol) in order to wet the seeds with the binder while agitating the seeds. After the seeds had been sufficiently wetted, a predetermined amount of powder for pelletization (mixture of diatomaceous soil, calcium carbonate, and the like) was added. Furthermore, pelletization was performed while alternately adding the binder for granulation and the powder for granulation. After pelletization, only pellets with a diameter ranging from 3.0 mm to 3.5 mm were selected from the thus obtained pellets using a sieve. Drying under low-temperature, low-humidity conditions was performed by placing a desiccator in a low temperature room at 15°C and then placing silica gel as a desiccating agent within the desiccator. The above pelleted seeds were added to beakers and then the beakers were placed in the desiccator, followed by 48 hours of drying. The humidity at this time within the desiccator was approximately 20%.

Comparative example 1

HAI00377 bacteria were cultured and collected by a method similar to that used in Example 1. Immersion treatment using the antagonistic microorganism was performed using the same amounts of seeds and an antagonistic microorganism suspension under normal pressure conditions. Surplus water was removed in a manner similar to that used in Example 1. After pelletization, ventilation drying was performed under 30°C conditions. The time for drying was 48 hours. Humidity in the room at this time was approximately 45%.

The survival percentage of the strain HAI00377 in pelleted seeds was found by the following method. 50 pelleted seeds (10 pellets × 5 times (repeated 5 times)) were placed on King B agar medium supplemented with streptomycin, followed by 96 hours of culture at 25°C. After culture, colonies of the strain HAI00377 were counted. Survival percentage was counted based on the number of colonies. Furthermore, the germination percentage of seeds was confirmed by the following method. 150 pelleted seeds (50 pellets × 3 times (repeated 3 times)) were placed on filter paper caused to absorb deionized water, followed by 14 days of cultivation under alternating temperature and dark conditions of 20°C for 16 hours and 30°C for 8 hours. Plants for which the presence of hypocotyls and radicles had been confirmed were counted, and then the germination percentage was measured from such number.

The results of Example 1 and Comparative example 1 are shown in Table 2. In the group (Example 1) that had been treated by pelletization after vacuum inoculation with the strain HAI00377 followed by drying under low-humidity conditions at 15°C, the survival percentage of the strain HAI00377 was 90%. In the group (Comparative example 1) that had been treated by pelletization after inoculation with the strain HAI00377 via immersion followed by ventilation drying at 30°C, the survival percentage of the strain HAI00377 was 24%. The survival percentage in Example 1 was higher than that in Comparative example 1. Moreover, the germination percentage of the pelleted carrot seeds in Example 1 was 85% or more equivalent to that in Comparative example 1. These results revealed that in production of pelleted carrot seeds, a method that comprises vacuum inoculating carrot seeds to be used herein with an antagonistic microorganism and then performing drying under low-temperature, low-humidity conditions is effective for the colonization of an antagonistic microorganism in carrot seeds.

Table 2

Effects of conditions for inoculation of carrot seeds (pelleted seeds) with Gram-negative bacteria (Pseudomonas) and drying on the survival percentage of the bacteria and the germination percentage

| | Survival percentage (%) of antagonistic microorganism | | Moisture content percentage (%) of pelleted seed | Germination percentage (%) of seed |
|---|---|---|---|---|
| | Before drying | After drying | After drying | After drying |
| Example 1 | 100 | 90 | 2 or less | 88 |
| Comparative example 1 | 100 | 24 | 2 or less | 85 |

Example 2: Effects of vacuum inoculation of tomato seeds with Gram-negative bacteria (bacteria of the genus *Pseudomonas)* and drying under low-temperature, low-humidity conditions on the survival percentage of the bacteria and the germination percentage of the seeds

Tomato seeds (variety: Myrock, Sakata Seed Corporation) were vacuum-inoculated with the Gram-negative bacterium *Pseudomonas putida* strain HAI00377 as an antagonistic microorganism under conditions similar to those used in Example 1. To remove surplus water, ventilation drying was performed at 30°C for 1 hour using a constant-temperature dryer (MOV-212F) (produced by SANYO). Drying under low-temperature, low-humidity conditions was performed by placing a desiccator in a low-temperature room at 15°C and then placing silica gel as a desiccating agent within the desiccator. The above seeds were added to beakers and then the beakers were placed in the desiccator, followed by 48 hours of drying. The humidity at this time within the desiccator was approximately 20%.

Comparative example 2

HAI00377 bacteria were cultured and collected by a method similar to that used in Example 1. Immersion treatment using the antagonistic microorganism was performed using the same amounts of seeds and an antagonistic microorganism suspension under normal pressure conditions. Surplus water was removed in a manner similar to that used in Example 1. Ventilation drying was performed under 30°C conditions. The time for drying was 48 hours. Humidity in the room at this time was approximately 45%.

The survival percentage of the strain HAI00377 in seeds was found by the following method. 50 seeds (10 seeds × 5 times (repeated 5 times)) were placed on King B agar medium supplemented with streptomycin, followed by 96 hours of culture at 25°C. After culture, colonies of the strain HAI00377 were counted. Survival percentage was counted based on the number of colonies. Furthermore, the germination percentage of seeds was confirmed by the following method. 150 seeds (50 seeds × 3 times (repeated 3 times)) were placed on filter paper caused to absorb deionized water, followed by 14 days of cultivation under constant temperature (25°C) and dark conditions. Plants for which the presence of hypocotyls and radicles had been confirmed were counted, and then the germination percentage was measured from such number.

The results of Example 2 and Comparative example 2 are shown in Table 3. In the group (Example 2) that had been treated by drying under low-humidity conditions at 15°C after vacuum inoculation with the strain HAI00377, the survival percentage of the strain HAI00377 was 90%. In the group (Comparative example 2) that had been treated by ventilation drying at 30°C after inoculation with the strain HAI00377 via immersion, the survival percentage of the strain HAI00377 was 14%. The survival percentage in Example 2 was higher than that in Comparative example 2. In Example 2, the germination percentage of the seeds was as high as 90% or more and presented no problems. These results revealed that in tomato seeds, a method that comprises vacuum inoculating tomato seeds with an antagonistic microorganism and then performing drying under low-temperature, low-humidity conditions is effective for the colonization of an antagonistic microorganism in tomato seeds.

Table 3

| Effects of conditions for inoculation of tomato seeds with Gram-negative bacteria *(Pseudomonas)* and drying on the survival percentage of the bacteria and germination percentage | | | |
|---|---|---|---|
| | Survival percentage (%) of antagonistic microorganism | | Germination percentage (%) of seed |
| | Before drying | After drying | After drying |
| Example 2 | 100 | 90 | 91 |
| Comparative example 2 | 100 | 14 | 94 |

Example 3: Effects of vacuum inoculation of broccoli seeds with Gram-negative bacteria (bacteria of the genus *Pseudomonas)* and drying under low-temperature, low-humidity conditions on the survival percentage of the bacteria and the germination percentage of the seeds

Under conditions similar to those used in Example 1, broccoli seeds (variety: *Ryokurei,* Sakata Seed Corporation) were vacuum-inoculated with the Gram-negative bacterium *Pseudomonas putida* strain HAI00377 as an antagonistic microorganism and then drying was performed under low-temperature, low-humidity conditions. The humidity in a desiccator after drying under low-temperature, low-humidity conditions was approximately 20%.

Comparative example 3

HAI00377 bacteria were cultured and collected by a method similar to that used in Example 1. Immersion treatment using the antagonistic microorganism was performed using the same amounts of seeds and an antagonistic microorganism suspension under normal pressure conditions. Surplus water was removed in a manner similar to that used in Example 1. Ventilation drying was performed under 30°C conditions. The time for drying was 48 hours. Humidity in the room at this time was approximately 45%.

The survival percentage of the strain HAI00377 in seeds was found by the following method. 50 seeds (10 seeds × 5 times (repeated 5 times)) were placed on King B agar medium supplemented with streptomycin, followed by 96 hours of culture at 25°C. After culture, colonies of the strain HAI00377 were counted. Survival percentage was counted based on the number of colonies. Furthermore, the germination percentage of seeds was confirmed by the following method. 150 seeds (50 seeds × 3 times (repeated 3 times)) were placed on filter paper caused to absorb deionized water, followed by 14 days of cultivation under alternating temperature (20°C for 16 hours and 30°C for 8 hours) and dark conditions. Plants for which the presence of hypocotyls and radicles had been confirmed were counted, and then the germination percentage was measured from such number.

The results of Example 3 and Comparative example 3 are shown in Table 4. In the group (Example 3) that had been treated by drying under low-humidity conditions at 15°C after vacuum inoculation with the strain HAI00377, the survival percentage of the strain HAI00377 was 96%. In the group (Comparative example 3) that had been treated by ventilation drying at 30°C after inoculation with the strain HAI00377 via immersion, the survival percentage of the strain HAI00377 was 20%. The survival percentage in Example 3 was higher than that in Comparative example 3. In Example 3, the germination percentage of the seeds was as high as 90% or more and presented no problems. These results revealed that in broccoli seeds, a method that comprises vacuum inoculating broccoli seeds with an antagonistic microorganism and then performing drying under low-temperature, low-humidity conditions is effective for the colonization of an antagonistic microorganism in broccoli seeds.

Table 4

| Effects of conditions for inoculation of broccoli seeds with Gram-negative bacteria *(Pseudomonas)* and drying on the survival percentage of the bacteria and the germination percentage | | | |
|---|---|---|---|
| | Survival percentage (%) of antagonistic microorganism | | Germination percentage (%) of seed |
| | Before drying | After drying | After drying |
| Example 3 | 100 | 96 | 93 |
| Comparative example 3 | 100 | 20 | 96 |

Example 4: Effects of vacuum inoculation of pumpkin seeds with Gram-negative bacteria (bacteria of the genus *Pseudomonas)* and drying under low-temperature, low-humidity conditions on the survival percentage of the bacteria and the germination percentage of the seeds

Under conditions similar to those used in Example 1, pumpkin seeds (variety: Marchen, Sakata Seed Corporation) were vacuum-inoculated with the Gram-negative bacterium *Pseudomonas putida* strain HAI00377 as an antagonistic microorganism and then drying was performed under low-temperature, low-humidity conditions. The humidity in a desiccator after drying under low-temperature and low-humidity conditions was approximately 20%.

Comparative example 4

HAI00377 bacteria were cultured and collected by a method similar to that used in Example 1. Immersion treatment using the antagonistic microorganism was performed using the same amounts of seeds and an antagonistic microorganism suspension under normal pressure conditions. Surplus water was removed in a manner similar to that used in Example 1. Ventilation drying was performed under 30°C conditions. The time for drying was 48 hours. Humidity in the room at this time was approximately 45%.

The survival percentage of the strain HAI00377 in seeds was found by the following method. 50 seeds (10 seeds × 5 times (repeated 5 times)) were placed on King B agar medium supplemented with streptomycin, followed by 96 hours of culture at 25°C. After culture, colonies of the strain HAI00377 were counted. Survival percentage was counted based on the number of colonies. Furthermore, the germination percentage of seeds was confirmed by the following method. 150 seeds (50 seeds × 3 times (repeated 3 times)) were placed on filter paper caused to absorb deionized water, followed by 14 days of cultivation under constant temperature (25°C) and dark conditions. Plants for which the presence of hypocotyls and radicles had been confirmed were counted, and then the germination percentage was measured from such number.

The results of Example 4 and Comparative example 4 are shown in Table 5. In the group (Example 4) that had been treated by drying under low-humidity conditions at 15°C after vacuum inoculation with the strain HAI00377, the survival percentage of the strain HAI00377 was 60%. In the group (Comparative example 4) that had been treated by ventilation drying at 30°C after inoculation with the strain HAI00377 via immersion, the survival percentage of the strain HAI00377 was 10%. The survival percentage in Example 4 was higher than that in Comparative example 4. In Example 4, the germination percentage of the seeds was 88% and presented no problems. These results revealed that in pumpkin seeds, a method that comprises vacuum inoculating pumpkin seeds with an antagonistic microorganism and then performing drying under low-temperature, low-humidity conditions is effective for the colonization of an antagonistic microorganism in pumpkin seeds.

Table 5

| Effects of conditions for inoculation of pumpkin seeds with Gram-negative bacteria *(Pseudomonas)* and drying on the survival percentage of the bacteria and the germination percentage | | | |
|---|---|---|---|
| | Survival percentage (%) of antagonistic microorganism | | Germination percentage (%) of seed |
| | Before drying | After drying | After drying |
| Example 4 | 100 | 60 | 88 |
| Comparative example 4 | 100 | 10 | 93 |

Example 5: Effects of vacuum inoculation of green soybean seeds with Gram-negative bacteria (bacteria of the genus *Pseudomonas)* and drying under low-temperature, low-humidity conditions on the survival percentage of the bacteria and the germination percentage of the seeds

Under conditions similar to those used in Example 1, green soybean seeds (variety: *Ama-ga-mine,* Sakata Seed Corporation) were vacuum-inoculated with the Gram-negative bacterium *Pseudomonas putida* strain HAI00377 as an antagonistic microorganism and then drying was performed under low-temperature, low-humidity conditions. The humidity in a desiccator after drying under low-temperature and low-humidity conditions was approximately 20%.

Comparative example 5

HAI00377 bacteria were cultured and collected by the method similar to that used in Example 1. Immersion treatment using the antagonistic microorganism was performed using the same amounts of seeds and an antagonistic microorganism suspension under normal pressure conditions. Surplus water was removed in a manner similar to that used in Example 1. Ventilation drying was performed under 30°C conditions. The time for drying was 48 hours. Humidity in the room at this time was approximately 45%.

The survival percentage of the strain HAI00377 in seeds was found by the following method. 50 seeds (10 seeds $\times$ 5 times (repeated 5 times)) were placed on King B agar medium supplemented with streptomycin, followed by 96 hours of culture at 25°C. After culture, colonies of the strain HAI00377 were counted. Survival percentage was counted based on the number of colonies. Furthermore, the germination percentage of seeds was confirmed by the following method. 150 seeds (50 seeds $\times$ 3 times (repeated 3 times)) were placed on filter paper caused to absorb deionized water, followed by 14 days of cultivation under constant temperature (25°C) and dark conditions. Plants for which the presence of hypocotyls and radicles had been confirmed were counted, and then the germination percentage was measured from such number.

The results of Example 5 and Comparative example 5 are shown in Table 6. In the group (Example 5) that had been treated by drying under low-humidity conditions at 15°C after vacuum inoculation with the strain HAI00377, the survival percentage of the strain HAI00377 was 96%. In the group (Comparative example 5) that had been treated by ventilation drying at 30°C after inoculation with the strain HAI00377 via immersion, the survival percentage of the strain HAI00377 was 30%. The survival percentage in Example 5 was higher than that in Comparative example 5. In Example 5, the germination percentage of the seeds was 27% and the same in Comparative example 5 was also as low as 39%. This was due to accidental poor quality of the seeds used herein. Hence, the degree of the effects resulting from the treatment conditions was considered to be small. These results revealed that in green soybean seeds, a method that comprises vacuum inoculating green soybean seeds with a microorganism and then performing drying under low-temperature, low-humidity conditions is effective for the colonization of a microorganism in green soybean seeds.

Table 6

| Effects of conditions for inoculation of green soybean seeds with Gram-negative bacteria (*Pseudomonas*) and drying on the survival percentage of the bacteria and the germination percentage | | | |
|---|---|---|---|
| | Survival percentage (%) of antagonistic microorganism | | Germination percentage (%) of seed |
| | Before drying | After drying | After drying |
| Example 5 | 100 | 96 | 27 |
| Comparative example 5 | 100 | 30 | 39 |

Example 6: Effects of vacuum inoculation of spinach seeds with Gram-negative bacteria (bacteria of the genus *Pseudomonas*), Gram-positive bacteria *(Bacillus),* and fungi (*Trichoderma*) and drying under low-temperature, low-humidity conditions on the survival percentages of the microorganisms and the germination percentages of the seeds

Under conditions similar to those used in Example 1, spinach seeds (variety: Platon, Sakata Seed Corporation) were vacuum-inoculated with the Gram-negative bacterium *Pseudomonas putida* strain HAI00377 and then drying was performed under low-temperature, low-humidity conditions. The *Pseudomonas putida* strain HAI00377 was inoculated on a 9-cm petri dish containing King B agar medium, followed by 2 days of static culture at 25°C. The bacteria were collected using a spreader and then suspended in distilled water supplemented with 1/5000 Tween80. Viable cell count measured by a dilution plate technique was approximately $1 \times 10^{10}$ cfu/ml.

Vacuum inoculation of the *Pseudomonas* strain HAI00377 was performed by the following method. 200 g of spinach seeds were wrapped with mesh and then added to a thin plastic case (that is usually used to contain strawberries for sale). A sinker was placed on the seeds so as to prevent the seeds from floating and thus to cause the seeds to sink down to the bottom and then 300 ml of a bacterial suspension was poured into the case. For a vacuum inoculation method, negative pressure conditions were created using a compact air pump NUP-2 (produced by ASONE). The pump (exhaust) capacity was 12 1/min, pressure achieved was 300 mmHg, and the time required to create the maximum negative pressure conditions was approximately 2 minutes. The seeds were placed under the maximum negative pressure conditions for 5 minutes. The cock was gradually opened for a return to normal pressure. The time required to reach normal pressure again was approximately 20 seconds. To remove surplus water, ventilation drying was performed at 30°C for 1 hour using a constant-temperature dryer (MOV-212F) (produced by SANYO).

The thus obtained seeds coated with the antagonistic microorganisms were further subjected to film-coating treatment. The film-coating treatment is as explained below. All of the spinach seeds (approximately 200 g) that had been coated above was sufficiently agitated while adding a small amount of a binder solution (8 ml in total, prepared with polyvinyl alcohol) at a time. Drying under low-temperature, low-humidity conditions was performed by placing a desiccator in a low temperature room at 15°C and then placing silica gel as a desiccating agent within the desiccator. The above seeds were added to beakers and then the beakers were placed in the desiccator, followed by 48 hours of drying. The humidity at this time within the desiccator was approximately 20%.

The survival percentage of the strain HAI00377 in seeds was found by the following method. 50 seeds (10 seeds × 5 times (repeated 5 times)) were placed on King B agar medium supplemented with streptomycin, followed by 96 hours of culture at 25°C. After culture, colonies of the strain HAI00377 were counted. Survival percentage was counted based on the number of colonies.

The Gram-positive bacterium *(Bacillus cereus)* strain KI2N was cultured in King B agar medium and then suspended in distilled water supplemented with 1/5000 Tween80, so as to prepare a $10^{10}$ cfu/ml bacterial suspension. Thus, a source of inoculum was prepared.

Vacuum inoculation with the *Bacillus cereus* strain KI2N and drying under low-temperature, low-humidity conditions were performed by a method similar to that employed for the *Pseudomonas* strain HAI00377.

The survival percentage of the *Bacillus cereus* strain KI2N in seeds was found by the following method. 50 seeds and 10 seeds were each suspended in a 10 ml of sterilized water and then 1:10 diluted solutions were prepared. These bacterial suspensions were treated at 80°C for 10 minutes, so as to cause microorganisms other than Bacillus forming heat-tolerant spores to die. The bacterial suspensions that had been subjected to heat treatment were spread on YG media, followed by 2 days of culture at 30°C. The presence or the absence of colonies that had appeared was then examined. Criteria with four grades were employed herein (-: No colonies; +: Colonies were detected at a dilution ratio of 50 seeds/10 ml; ++: Colonies were detected at a dilution ratio of 10 seeds/10 ml; and +++: colonies were detected at a dilution ratio of 1 seed/10 ml).

The *Trichoderma harzianum* strain Kubota was provided by Kawata Engineering Co., Ltd. The fungus *(Trichoderma harzianum)* strain Kubota was cultured in PDA medium and then suspended in distilled water supplemented with 1/5000 Tween80, so as to prepare a $10^7$ cfu/ml fungous spore suspension. Thus a source of inoculum was prepared.

Vacuum inoculation with the *Trichoderma harzianum* strain Kubota and drying under low-temperature, low-humidity conditions were performed by a method similar to that employed for the *Pseudomonas* strain HAI00377.

The survival percentage of the *Trichoderma harzianum* strain Kubota was found by the following method. 50 seeds and 5 seeds of seeds were each suspended in a 10 ml of sterilized water. Furthermore, 1:10 diluted solutions were prepared. Accordint to a dilution plate technique, these fungous suspensions were spread on rose bengal agar media. The fungi were cultured at 25°C for 1 week and then determination was performed based on the appearance of unique green colonies of *Trichoderma* fungi. Criteria with four grades were employed herein (-: No colonies; +: Colonies were detected at a dilution ratio of 50 seeds/10 ml; ++: Colonies were detected at a dilution ratio of 5 seeds/10 ml; +++: Colonies were detected at a dilution ratio of 0.5 seed/10 ml; and ++++: Colonies were detected at a dilution ratio of 0.05 seed/10 ml).

The germination percentages of the seeds coated with the antagonistic microorganisms were confirmed by the following method. 150 seeds (50 seeds × 3 times (repeated 3 times)) were placed on filter paper caused to absorb deionized water, followed by 14 days of cultivation at constant temperature (20°C) and dark conditions. Plants for which the presence of hypocotyls and radicles had been confirmed was counted and then the germination percentage was measured from such number.

Comparative example 6

*Pseudomonas* HAI00377 bacteria, *Bacillus cereus* strain KI2N, and the *Trichoderma harzianum* strain Kubota were cultured and collected by a method similar to that used in Example 6. Immersion treatment using these antagonistic microorganisms was performed using the same amounts of seeds and antagonistic microorganism suspensions under normal pressure conditions. Surplus water was removed in a manner similar to that used in Example 1. Film-coating treatment was performed and then ventilation drying was performed under 30°C conditions. The time for drying was 48 hours. Humidity in the room at this time was approximately 45%.

The survival percentages of *Pseudomonas* HAI00377 bacteria, the *Bacillus cereus* strain KI2N, and the *Trichoderma harzianum* strain Kubota in seeds were found by a method similar to that used in Example 6. Germination percentages of the seeds were also found by the same method as that in Example 6.

The results of Example 6 and Comparative example 6 are shown in Table 7. In the group (Example 6-1) that had been treated by drying under low-humidity conditions at 15°C after vacuum inoculation with the strain HAI00377, the survival percentage of the strain HAI00377 was 100%. In the group (Comparative example 6-1) that had been treated by ventilation drying at 30°C after inoculation with the strain HAI00377 via immersion, the survival percentage of the strain HAI00377 was 92%. The survival percentage in Example 6-1 was higher than that in Comparative example 6-1.

It was demonstrated that the survival percentage of the strain KI2N in the group (Example 6-2) that had been treated by drying under low-humidity conditions at 15°C after vacuum inoculation was clearly higher than that of the strain KI2N in the group (Comparative example 6-2) that had been treated by ventilation drying at 30°C after inoculation with the strain KI2N via immersion.

The survival percentage of the strain Kubota in the group (Example 6-3) that had been treated by drying under low-humidity conditions at 15°C after vacuum inoculation was compared with the same in the group (Comparative example 6-3) that had been treated by ventilation drying at 30°C after inoculation with the strain Kubota via immersion. Although there was no difference in microbial survival percentage between the two immediately after drying, the germination percentage of the seeds in the Example 6-3 was as high as 90%. These results revealed that in production of film-coated spinach seeds, a method that comprises vacuum inoculating spinach seeds to be used herein with Gram-negative bacteria (bacteria of the genus *Pseudomonas),* Gram-positive bacteria *(Bacillus),* or fungi (*Trichoderma*) and then performing drying under low-temperature, low-humidity conditions is effective for improving the colonization of microorganisms in spinach seeds and the germination percentages of the seeds.

Table 7

| Effects of conditions for inoculation of spinach seeds (film-coated seeds) with Gram-negative bacteria (bacteria of the genus *Pseudomonas*), Gram-positive bacteria (bacteria of the genus *Bacillus),* or fungi (fungi of the genus *Trichoderma*) and drying on the survival percentages of the microorganisms and the germination percentages | | | | |
|---|---|---|---|---|
| | | Survival percentage (%) of antagonistic microorganism | | Germination percentage (%) of seed |
| | | Before drying | After drying | After drying |
| Bacteria of the genus *Pseudomonas* | Example 6-1 | 100 | 100 | 96 |
| | Comparative example 6-1 | 100 | 92 | 95 |
| Bacteria of the genus *Bacillus* | Example 6-2 | + + | + + | 95 |
| | Comparative example 6-2 | + + | + | 92 |
| Fungi of the genus *Trichoderma* | Example 6-3 | + + + + | + + + | 90 |
| | Comparative example 6-3 | + + + + | + + + | 81 |

<u>Example 7: Effects of vacuum inoculation of rice seeds with Gram-negative bacteria (bacteria of genus *Pseudomonas),* Gram-positive bacteria *(Bacillus),* and fungi *(Trichoderma)* and/or drying under low-temperature, low-humidity conditions on the survival percentages of the microorganisms and the germination percentage of the seeds</u>

Under conditions similar to those used in Example 1, rice seeds (variety: *Hinohikari,* Miyazaki prefecture) were vacuum-inoculated with the Gram-negative bacterium *Pseudomonas putida* strain HAI00377 and then drying was performed under low-temperature, low-humidity conditions.

Furthermore, either vacuum inoculation with the *Pseudomonas* strain HAI00377 or drying under low-temperature, low-humidity conditions or both steps were performed. Vacuum treatment for the strain HAI00377 was performed by a method similar to that used in Example 1. Immersion treatment was performed using the same amounts of seeds and a suspension of the strain HAI00377 under normal pressure conditions. Drying under low-temperature, low-humidity

EP 1 935 245 A1

conditions was performed at 15°C by a method similar to that used in Example 1. Surplus water was removed and then ventilation drying was performed under 30°C conditions. The time for drying was 48 hours in all cases.

The survival percentage of the strain HAI00377 in seeds was found by the following method. 50 seeds (10 seeds × 5 times (repeated 5 times)) were placed on King B agar medium supplemented with streptomycin, followed by 96 hours of culture at 25°C. After culture, colonies of the strain HAI00377 were counted. Survival percentage was counted based on the number of colonies.

The *Bacillus cereus* strain KI2N was cultured in King B agar medium and then suspended in distilled water supplemented with 1/5000 Tween80, so as to prepare a $10^{10}$ cfu/ml bacterial suspension. Thus, a source of inoculum was prepared.

The survival percentage of the *Bacillus cereus* strain KI2N in seeds was found by the following method. 50 seeds and 10 seeds were each suspended in a 10 ml of sterilized water. Furthermore, 1:10 diluted solutions were prepared. These bacterial suspensions were treated at 80°C for 10 minutes, so as to cause microorganisms other than Bacillus forming heat-tolerant spores to die. The bacterial suspensions that had been subjected to heat treatment were spread on YG media, followed by 2 days of culture at 30°C. The presence or the absence of colonies that had appeared was then examined. Criteria with four grades were employed herein (-: No colonies; +: Colonies were detected at a dilution ratio of 50 seeds/10 ml; ++: Colonies were detected at a dilution ratio of 10 seeds/10 ml; and +++: Colonies were detected at a dilution ratio of 1 seed/10 ml).

The *Trichoderma harzianum* strain Kubota was cultured in PDA medium and then suspended in distilled water supplemented with 1/5000 Tween80, so as to prepare a $10^7$ cfu/ml fungous spore suspension. Thus, a source of inoculum was prepared.

The survival percentage of the *Trichoderma harzianum* strain Kubota was found by the following method. 50 seeds and 5 seeds were each suspended in a 10 ml of sterilized water. Furthermore, 1:10 diluted solutions were prepared. According to a dilution plate technique, these fungous spore suspensions were spread on rose bengal agar media. The fungi were cultured at 25°C for 1 week and then determination was performed based on the appearance of unique green colonies of *Trichoderma* fungi. Criteria with four grades were employed herein (-: No colonies; +: Colonies were detected at a dilution ratio of 50 seeds/10 ml; ++: Colonies were detected at a dilution ratio of 5 seeds/10 ml; +++: Colonies were detected at a dilution ratio of 0.5 seed/10 ml; and ++++: Colonies were detected at a dilution ratio of 0.05 seed/10 ml).

The germination percentages of the above seeds coated with the antagonistic microorganisms were confirmed by the following method. 150 seeds (50 seeds × 3 times (repeated 3 times)) were placed on filter paper caused to absorb deionized water, followed by 14 days of cultivation under constant temperature (20°C) and dark conditions. Plants for which the presence of hypocotyls and radicles had been confirmed were counted, and then the germination percentage was measured from such number.

Comparative example 7

*Pseudomonas* HAI00377 bacteria, the *Bacillus cereus* strain KI2N, and the *Trichoderma harzianum* strain Kubota were cultured and collected by a method similar to that used in Example 7. Immersion treatment using these antagonistic microorganisms was performed using the same amounts of seeds and antagonistic microorganism suspensions under normal pressure conditions. Surplus water was removed in a manner similar to that used in Example 7. Ventilation drying was then performed under 30°C conditions. The time for drying was 48 hours.

The survival percentages of the *Pseudomonas* HAI00377 bacteria, the *Bacillus cereus* strain KI2N, and the *Trichoderma harzianum* strain Kubota in seeds were found by a method similar to that used in Example 7. Germination percentages of the seeds were also found by the same method as that in Example 7.

The results of Example 7 and Comparative example 7 are shown in Table 8. Whereas the survival percentages of the antagonistic microorganism (the *Pseudomonas* strain HAI00377) that had been treated under the three conditions of Examples 7-1 to 7-3 ranged from 82% to 100%, the same in the group (Comparative example 7-I) that had been treated by ventilation drying at 30°C after inoculation with the strain HAI00377 via immersion was 56%. The germination percentage of the seeds was somewhat lower in Comparative example 7 and the germination percentages were observed to be as high as 90% or more in the three experimental groups in Example 7.

Regarding the strain K12N, no bacteria (bacteria of the genus *Bacillus)* that had formed heat-tolerant spores were detected as a result of heat treatment of rice seeds in Comparative example 7-II. In contrast, heat-tolerant spores formed by bacteria of the genus *Bacillus* that had been treated under the three conditions of Example 7-4 to 7-6 were detected. Regarding the germination percentages of the seeds, germination percentages were as high as 95% or more in both Comparative example 7-II and Example 7-4 to 7-6.

Regarding the strain Kubota, a decrease in survival percentage was observed in Comparative example 7-III; however, survival percentages were maintained high in the three experimental groups of Example 7-7 to 7-9. Regarding the germination percentages of the seeds, germination percentages in the three experimental groups of Example 7-7 to 7-9 were found to be somewhat as high as 95% or more that is greater than that of Comparative example 7-III.

These results revealed that in rice seeds, it is effective for the colonization of microorganisms in seeds to perform either vacuum inoculation of the seeds with Gram-negative bacteria (bacteria of the genus *Pseudomonas),* Gram-positive bacteria *(Bacillus),* or fungi (*Trichoderma*) or drying under low-temperature, low-humidity conditions or to perform both steps.

Table 8

| Effects of conditions for inoculation of rice seeds with Gram-negative bacteria (bacteria of the genus *Pseudomonas),* Gram-positive bacteria (bacteria of the genus *Bacillus),* or fungi (fungi of the genus *Trichoderma)* and drying on the survival percentages of the microorganisms and the germination percentages | | | | | | |
|---|---|---|---|---|---|---|
| | | | | Survival percentage (%) of antagonistic microorganism | | Germination percentage (%) of seed |
| | | Inoculation method | Drying method | Before drying | After drying | After drying |
| Bacteria of the genus *Pseudomonas* | Comparative example 7-I | Inoculation via immersion | Air ventilation at 30°C | 100 | 56 | 87 |
| | Example 7-1 | Inoculation via immersion | Low humidity at 15°C | 100 | 100 | 91 |
| | Example 7-2 | Vacuum inoculation | Air ventilation at 30°C | 100 | 82 | 92 |
| | Example 7-3 | Vacuum inoculation | Low humidity at 15°C | 100 | 100 | 96 |
| Bacteria of the genus *Bacillus* | Comparative example 7-II | Inoculation via immersion | Air ventilation at 30°C | | - | 98 |
| | Example 7-4 | Inoculation via immersion | Low humidity at 15°C | | + + | 96 |
| | Example 7-5 | Vacuum inoculation | Air ventilation at 30°C | | + | 95 |
| | Example 7-6 | Vacuum inoculation | Low humidity at 15°C | | + + + | 96 |
| Fungi of the genus *Trichoderma* | Comparative example 7-III | Inoculation via immersion | Air ventilation at 30°C | | + + | 94 |
| | Example 7-7 | Inoculation via immersion | Low humidity at 15°C | | + + + + | 99 |
| | Example 7-8 | Vacuum inoculation | Air ventilation at 30°C | | + + + + | 98 |
| | Example 7-9 | Vacuum inoculation | Low humidity at 15°C | | + + + + | 97 |

Example 8: Storage test for seeds coated with each microorganism

Pelleted carrot seeds in Example 1 and Comparative example 1 and rice seeds in Example 7 and Comparative example 7 were used. The seeds were stored under conditions of humidities ranging from 30% to 35%, temperatures of 5°C, 15°C, and 25°C. Viable cell count was measured for each condition.
Results are shown in Table 9.
As a result of the storage test for the pelleted carrot seeds, the survival percentage decreased significantly under the conditions of Comparative example 1, but the survival percentage was as high as 90% under the conditions of Example 1.
As a result of the storage test for the rice seeds, when storage temperatures were 5°C and 15°C, respectively, the survival percentage was approximately 10% in Comparative example 7-I. However, the survival percentages ranged from 26% to 100% in Example 7-1 to 7-3. In particular, the survival percentage ranged from as high as 84% to 100% in Example 7-3. When the rice seeds coated with bacteria of the genus *Bacillus* were stored, no bacteria of the genus *Bacillus* could be detected in Comparative example 7-II; however, bacteria of the genus *Bacillus* were detected in the cases of storage at 5°C and that same at 15°C under the conditions of Example 7-6.

Table 9

| Survival percentages of microorganisms in stored seeds | | | | | |
|---|---|---|---|---|---|
| | | Storage period | 5°C | 15°C | 25°C |
| Comparative example 1 | Carrot | 1 month | 24% | 24% | 24% |
| Example 1 | Carrot | 1 month | 90% | 90% | 90% |
| Comparative example 7-I | Rice | 1 month | 10% | 10% | 0% |
| Example 7-1 | Rice | 1 month | 82% | 54% | 0% |
| Example 7-2 | Rice | 1 month | 50% | 26% | 0% |
| Example 7-3 | Rice | 1 month | 100% | 84% | 2% |
| Comparative example 7-II | Rice | 2 months | - | - | - |
| Examples 7-6 | Rice | 2 months | + + | + | - |

Example 9: Disease control effects of seeds coated with an antagonistic microorganism against clubroot of the family Brassicaceae

Broccoli seeds (variety: *Ryokurei,* Sakata Seed Corporation) were coated with the Gram-negative bacterium *(Pseudomonas putida)* strain HAI00377 as an antagonistic microorganism under conditions same as those used in Example 3 and Comparative example 3. Thus, seeds coated with the microorganism were prepared.

The broccoli seeds were placed on King B agar medium supplemented with streptomycin, followed by 3 days of culture at 25°C. Seeds on which colonies emitting fluorescence had appeared were counted. Then the colonization percentages of HAI00377 in the seeds were calculated.

The results are shown in Table 10. The colonization percentage of the microorganism after vacuum inoculation and drying under low-temperature, low-humidity conditions was 100%. On the other hand, the colonization percentage of the microorganism after inoculation via immersion and ventilation drying with heating was 7%.

Table 10

| Results of examining the colonization percentages | | | | | | |
|---|---|---|---|---|---|---|
| Inoculation method | Conditions for drying | Date of treatment of seeds | Date of placement | Date of examination | Fluorescent colony/ placement | Colonization percentage of microorganism |
| Vacuum inoculation | Low humidity at 10°C | April 14 | April 15 | April 18 | 100/100 | 100% |
| Inoculation via immersion | Drying at 50°C | April 14 | April 15 | April 18 | 7/100 | 7% |
| No inoculation | No treatment | April 14 | April 15 | April 18 | 1/100 | 1% |

Seeds treated with endophytic bacteria by each of the above methods were seeded on 128-well cell trays packed with culture soil Metromix 350, followed by 3 weeks of raising of the seedlings in a green house. Each seedling having 1.5 true leaves was transplanted in a 10.5-cm Y pot packed with soil mixed with resting spores of *Plasmodiophora brassicae* strain HTKZE at a concentration of 1000 spores/g. Thus, inoculation with the *Plasmodiophora brassicae* was performed. After 25 days of cultivation in the green house (lowest temperature of 18°C to highest temperature of 28°C), root portions were washed with water. The disease severity of the clubroot was examined for each plant. The following disease index system was employed for examining disease occurrence: index 0: no development of the disease was confirmed; index 1: clubroots were barely formed on lateral root portions; index 2: clubroots were formed and became enlarged on the main root and side roots; and index 3: clubroots were formed and became enlarged significantly. The disease severity of the clubroot was calculated by the following formula.

$$\text{Disease severity} = [(\text{Disease index} \times \text{Number of plants with each index}) \times 100]/[3 \times \text{Number of plants examined}]$$

Protection value was calculated by the following formula.

$$\text{Protection value} = 100 - [\text{Disease severity in treated group}/ \text{Disease severity in untreated group} \times 100]$$

The results are shown in Table 11. The disease severity was lower in the group that had been treated with the endophytic bacteria by vacuum inoculation and drying under low-temperature, low-humidity conditions than the same in the group that had been treated by inoculation via immersion and ventilation drying with heating or the untreated group. The disease control effect of 37% was confirmed in the group that had been treated with the endophytic bacteria by vacuum inoculation and drying under low-temperature, low-humidity conditions.

Table 11

| Test for broccoli clubroot control by treatment of seeds with the endophytic bacterium HA100377 | | | | | | | | | |
|---|---|---|---|---|---|---|---|---|---|
| Variety name | Inoculation method | Conditions for drying | Number of plants examined | Number of plants with each disease index | | | | Disease severity | Protection value |
| | | | | 0 | 1 | 2 | 3 | | |
| *Ryokurei* | Vacuum inoculation | Low humidity at 10°C | 10 | | 2 | 7 | 1 | 63 | 37 |
| *Ryokurei* | Inoculation via immersion | Drying at 30°C | 10 | | | | 10 | 100 | 0 |
| *Ryokurei* | No inoculation | No treatment | 10 | | | | 10 | 100 | |
| Sowing : April 15, 2005. Inoculation : May 6, 2005. Examination: May 31, 2005. | | | | | | | | | |

Based on the above results, it is clear that the survival percentage of an antagonistic microorganism used for inoculation of seeds is significantly enhanced by a method that comprises vacuum inoculating seeds with an antagonistic microorganism, a method that comprises inoculating seeds with an antagonistic microorganism and then drying the seeds under low-temperature, low-humidity conditions after inoculation, or a combination of the two methods. Furthermore, seeds coated with an antagonistic microorganism, which had been prepared based on the present invention, showed high protection values against the soil disease. Therefore, the use of the present invention makes it possible to conveniently provide seeds with high disease control effects and high preservation stability at low cost.

The following Reference examples, Examples, and Comparative examples relate to a method that comprises coating lettuce seeds with endophytic bacteria (the bacteria showing an antagonistic nature against fungi of the genus *Olpidium* that retain the lettuce big-vein virus), so as to achieve disease control effects against the lettuce big-vein disease. In Examples in which lettuce was used, antagonistic endophytic bacteria were used as antagonistic microorganisms.

Reference example 2: Effects of inoculation of film-coated lettuce seeds with antagonistic endophytic bacteria and drying on the survival percentage of the antagonistic endophytic bacteria

The *Pseudomonas* sp. strain FPH-2003 (FERM BP-10665) was used as an antagonistic endophytic bacterium.

The *Pseudomonas* strain FPH-2003 was inoculated on a 9-cm petri dish containing King B agar medium, followed by 2 days of static culture at 25°C. The bacteria were collected using a spreader and then used as a source of inoculum.

10 ml of a binder solution prepared with polyvinyl alcohol (PVA) or polyvinyl acetate (PVAc) was added to the thus collected strain FPH-2003. The strain FPH-2003 was sufficiently dispersed using a rotator (agitator). The resultant was then sufficiently agitated while adding a small amount of the strain at a time to 100 g of lettuce seeds (variety: Logic). The seeds were placed in a hot-air ventilation dryer at 25°C or 35°C and then dried for 24 hours.

The bacterial density of the strain FPH-2003 in the seeds was obtained by the following method. 100 seeds were suspended in 10 ml of sterilized water and then 1:10, 1:100, 1:1000, and 1:10000 diluted solutions were prepared. Accordinf to a dilution plate technique, these bacterial suspensions were spread on King B agar media supplemented with streptomycin. The bacteria were cultured at 25°C for 96 hours and then determination was performed based on the appearance of colonies.

The results of Reference example 2 are as shown in Table 12. The bacterial density in lettuce seeds that had been inoculated with the strain FPH-2003 with the use of a PVA film-coating agent was $6.2 \times 10^4$ cfu/seed before drying (in all the groups dried at different temperatures); however, all the bacteria died after 6 hours of drying. Furthermore, the bacterial density in lettuce seeds that had been inoculated with the strain FPH-2003 with the use of a PVAc film-coating agent was $1.2 \times 10^5$ cfu/seed before drying (in all the groups dried at different temperatures); however, all the bacteria died after 24 hours of drying. Accordingly, the results revealed that it is extremely difficult for antagonistic endophytic bacteria to survive after inoculation of lettuce seeds with antagonistic endophytic bacteria and subsequent drying.

Table 12

Effects of inoculation of film-coated lettuce seeds with antagonistic endophytic bacteria and drying on the survival percentage of antagonistic endophytic bacteria

| Film-coating agent | Temperature for drying (°C) | Bacterial density (cfu/seed) of antagonistic endophytic bacterium | | | Survival percentage (%) of antagonistic endophytic bacterium after 6 hours of drying |
| --- | --- | --- | --- | --- | --- |
| | | 0 hours of drying | 6 hours of drying | 24 hours of drying | |
| PVA film-coating agent | 25 | $6.2 \times 10^4$ | 0 | 0 | 0 |
| | 35 | $6.2 \times 10^4$ | 0 | 0 | 0 |
| PVAc film-coating agent | 25 | $1.2 \times 10^5$ | $4.3 \times 10^3$ | 0 | 3.6 |
| | 35 | $1.2 \times 10^5$ | $1.6 \times 10^2$ | 0 | 0.1 |

Reference example 3: Effects of the moisture content percentage of pelleted lettuce seeds inoculated with antagonistic endophytic bacteria on the survival of the antagonistic endophytic bacteria

The *Pseudomonas* sp. strain FPH-2003 (FERM BP-10665) was used as an antagonistic endophytic bacterium. The *Pseudomonas* strain FPH-2003 was inoculated on a 9-cm petri dish containing King B agar medium, followed by 2 days of static culture at 25°C. The bacteria were collected using a spreader and then used as a source of inoculum.

20 ml of sterilized water was added to the thus collected strain FPH-2003. The strain FPH-2003 was sufficiently dispersed using a rotator (agitator). The solution in which the antagonistic endophytic bacteria had been dispersed was used for pelletization of lettuce seeds. Next, the pelletization step is as explained below. 100 grams of lettuce seeds (variety: Logic) was placed in a rotating pelletizing unit (produced by SEED PROCESSING). The seeds were sprayed with the solution in which the antagonistic endophytic bacteria had been dispersed in order to wet the seeds with the dispersion while agitating the seeds. After the seeds had been sufficiently wetted, a small amount of powder for granulation (the mixture of diatomaceous soil, calcium carbonate, and the like) was added and the mixture was then agitated. Furthermore, spraying with the solution in which the antagonistic endophytic bacteria had been dispersed and addition of a small amount of the powder for granulation were repeated until all the solution in which the antagonistic endophytic bacteria had been dispersed was used up. Subsequently, the binder for granulation was replaced by 3.0% polyvinyl alcohol and then pelletization was performed by alternately adding the binder for granulation and the powder for granulation. After pelletization, only pellets with a pellet diameter ranging from 3.0 mm to 3.5 mm were selected using a sieve. The seeds were placed in a hot-air ventilation dryer at 30°C and then dried for 24 hours. The humidity at this time within the room was approximately 45%.

The bacterial density of the strain FPH-2003 in pelletized seeds was measured by a method similar to that of Reference example 2. The survival percentage of the strain FPH-2003 in pelletized seeds was found by the following method. 50 pelleted seeds (10 pellets $\times$ 5 times (repeated 5 times)) were placed on King B agar medium supplemented with streptomycin, followed by 96 hours of culture at 25°C. After culture, colonies of the strain FPH-2003 were counted. Survival percentage was counted based on the number of colonies.

The results of Reference example 3 are shown in Table 13. In the case of the lettuce seeds inoculated (sprayed) with the strain FPH-2003, the higher the moisture content percentage of the pelleted seeds, the higher the survival percentage and the bacterial density of the strain FPH-2003. That is, it was revealed that the strain FPH-2003 decreased as the pelleted seeds were dried. Specifically, it was revealed that the moisture content percentage of pellets that can be generally and practically tested ranges from 0.5% to 3.0%, however, the strain FPH-2003 completely die when the moisture content percentage is lowered to 0.8%. In the case of lettuce seeds, the seeds get moldy, go rotten, and/or germinate when the moisture content percentage exceeds 10% during storage so that the seeds cannot be used practically. Therefore, the result revealed that it is extremely difficult to cause colonization of antagonistic endophytic bacteria in lettuce seeds by a conventional method that comprises inoculating (spraying) lettuce seeds with antagonistic endophytic bacteria, performing pelletization, and then performing ventilation drying with heating.

Table 13

| Relationship between the moisture content percentages of pelleted Lettuce seeds_and the survival percentages of antagonistic endophytic bacteria | | |
| --- | --- | --- |
| Moisture content percentage (%) of pelleted seed | Survival percentage (%) of antagonistic endophytic bacterium | Bacterial density of antagonistic endophytic bacterium (cfu/seed) |
| 28.8 | 93 | $6.7 \times 10^3$ |
| 9.5 | 70 | $3.0 \times 10^3$ |
| 7.6 | 40 | $1.8 \times 10^2$ |
| 4.8 | 20 | $1.1 \times 10^2$ |
| 3.4 | 13 | 0 |
| 1.3 | 7 | 0 |
| 0.8 | 0 | 0 |

Example 10: Effects of methods for inoculating lettuce seeds with antagonistic endophytic bacteria on the survival of the antagonistic endophytic bacteria

The *Pseudomonas* sp. strain FPH-2003 (FERM BP-10665) was used as an antagonistic endophytic bacterium. The *Pseudomonas* sp. strain FPH-2003 was inoculated on a 9-cm petri dish containing King B agar medium, followed by 2 days of static culture at 25°C. The bacteria were collected using a spreader and then suspended in sterilized water supplemented with 1/5000 Tween80. Viable cell count measured by a dilution plate technique was approximately $1 \times 10^{10}$ cfu/ml. 100 g of lettuce seeds (variety: Logic) were wrapped with mesh and then added to a thin plastic case (that is usually used to contain strawberries for sale). A sinker was placed on the seeds so as to prevent the seeds from floating and thus to cause the seeds to sink down to the bottom and then 300 ml of a bacterial suspension was poured into the case. For a vacuum inoculation method, negative pressure conditions were created using a compact air pump NUP-2 (produced by ASONE). The pump (exhaust) capacity was 12 1/min, pressure achieved was 300 mmHg, and the time required to create the maximum negative pressure conditions was approximately 2 minutes. The seeds were placed under the maximum negative pressure conditions for 5 minutes. The cock was gradually opened for a return to normal pressure. The time required for a return to normal pressure was approximately 20 seconds. Temperature conditions comprise a temperature range of 25°C$\pm$5°C. To remove surplus water, ventilation drying was performed at 30°C for 1 hour using a constant-temperature dryer (MOV-212F) (produced by SANYO).

The thus obtained lettuce seeds coated with the antagonistic endophytic bacteria were further subjected to pelletization. The pelletization step is as explained below. All of the lettuce seeds (approximately 100 g) that had been coated above was placed in a rotating pelletizing unit (produced by SEED PROCESSING). The seeds were sprayed with a binder for granulation (3.0% polyvinyl alcohol) in order to wet the seeds with the binder while agitating the seeds.

After the seeds had been sufficiently wetted, a predetermined amount of powder for granulation (the mixture of diatomaceous soil, calcium carbonate, and the like) was added. Furthermore, pelletization was performed while alternately adding the binder for granulation and the powder for granulation. After pelletization, only pellets with diameters ranging from 3.0 mm to 3.5 mm were selected from the thus obtained pellets using a sieve. The seeds were placed in a hot-air ventilation dryer at 30°C and then dried for 24 hours. The humidity at this time within the room was approximately 45%.

Comparative example 10

The strain FPH-2003 was cultured and collected by a method similar to that used in Example 10. Immersion treatment using the strain FPH-2003 was performed using 100 g of lettuce seeds (variety: Logic) and an antagonistic endophytic bacterial suspension under normal pressure conditions. Surplus water was removed in a manner similar to that used in Example 10 and then pelletization was performed. The seeds were placed in a hot-air ventilation dryer at 30°C and then dried for 24 hours. Humidity in the room at this time was approximately 45%.

The survival percentage of the strain FPH-2003 in the pelletized seeds was obtained by a method similar to that used in Reference example 3.

The results of Example 10 and Comparative example 10 are shown in Table 14. Almost no decrease was observed in the survival percentage of the strain FPH-2003 in the group (Example 10) that had been palletized after vacuum inoculation with the strain FPH-2003 even after drying and remained at a level as high as 93% even when the moisture content percentage was 1.1%, which was lower than the same (2%) of general commercial pellets. On the other hand, the survival percentage of the strain FPH-2003 in the group (Comparative example 10) that had been palletized after inoculation with the strain FPH-2003 via immersion gradually decreased as the seeds were dried. Furthermore, the survival percentage of the strain FPH-2003 became 3% when the moisture content percentage was 1.1%, which was lower than the same (2%) of general commercial pellets, indicating that most of the strain FPH-2003 had died. These results revealed that in production of pelleted lettuce seeds, a method that comprises vacuum inoculating lettuce seeds to be used herein with antagonistic endophytic bacteria is effective for the colonization of antagonistic endophytic bacteria in lettuce seeds.

Table 14

Effects of a method for inoculating lettuce seeds with antagonistic endophytic bacteria on the survival of the antagonistic endophytic bacteria

| | Moisture content percentage (%) of pelleted seed | Survival percentage (%) of antagonistic endophytic bacteria |
|---|---|---|
| Example 10 | 29.8 | 100 |
| | 24.6 | 100 |
| | 13.2 | 100 |
| | 1.8 | 93 |
| | 1.1 | 93 |
| Comparative example 10 | 30.1 | 100 |
| | 22.8 | 100 |
| | 11.7 | 93 |
| | 1.8 | 50 |
| | 1.1 | 3 |

Example 11: Effects of a method for inoculating lettuce seeds with antagonistic endophytic bacteria and a drying method on the survival of antagonistic endophytic bacteria and germination of the seeds

The *Pseudomonas* sp. strain FPH-2003 (FERM BP-10665) was used as an antagonistic endophytic bacterium. Vacuum inoculation and pelletization were performed under conditions similar to those used in Example 10. The seeds were dried under low-temperature, low-humidity conditions by the following method. A desiccator is placed in a low temperature room at 15°C and then silica gel was placed in the desiccator as a desiccating agent. Pelleted seeds were placed in the desiccator and then dried for 24 hours. The humidity at this time within the desiccator was approximately 20%.

Comparative example 11

Immersion treatment using the strain FPH-2003 was performed and then pelletization was performed by a method similar to that used in Comparative example 10. The seeds were placed in a hot-air ventilation dryer at 30°C and then dried for 24 hours. Humidity in the room at this time was approximately 45%.

The survival percentage of the strain FPH-2003 in pelletized seeds was found by a method similar to that used in Reference example 3. The germination percentage of the seeds was confirmed by the following method. Furthermore, 150 pelleted seeds (10 pellets × 3 times (repeated 3 times)) were placed on filter paper caused to absorb deionized water, followed by 14 days of cultivation under dark conditions at 20°C. Plants for which the presence of hypocotyls and radicles had been confirmed were counted, and then the germination percentage was measured from such number.

The results of Example 11 and Comparative example 11 are shown in Table 15. In the group (Example 11) that had been dried under low-temperature, low-humidity conditions at 15°C after vacuum inoculation with the strain FPH-2003, the survival percentage of the strain FPH-2003 was 100%. In the group (Comparative example 11) that had been treated by ventilation drying at 30°C after inoculation with the strain FPH-2003 via immersion, the survival percentage of the strain FPH-2003 was 11%. The survival percentage in Example 11 was higher than that in Comparative example 11. The germination percentage of the seeds was as high as 95% or more and presented no problems. These results revealed that in lettuce seeds, a method that comprises vacuum inoculating lettuce seeds with antagonistic endophytic bacteria and then performing drying under low-temperature, low-humidity conditions is effective for the colonization of antagonistic endophytic bacteria in lettuce seeds.

Table 15

Effects of a method for inoculating lettuce seeds with antagonistic endophytic bacteria and a drying method on the survival of antagonistic endophytic bacteria and the germination of the seeds

|  | Survival percentage (%) of antagonistic endophytic bacterium | | Moisture content percentage (%) of pelleted seed | Germination percentage (%) of seed |
|---|---|---|---|---|
|  | Before drying | After drying | After drying | After drying |
| Example 11 | 100 | 100 | 2% or less | 98 |
| Comparative example 11 | 100 | 11 | 2% or less | 96 |

Example 12: Preservation stability test for antagonistic endophytic bacteria in pelleted lettuce seeds after vacuum inoculation with antagonistic endophytic bacteria and subsequent drying under low-temperature, low-humidity conditions (changes in survival percentages of antagonistic endophytic bacteria and germination percentages of the seeds)

After vacuum inoculation with the strain FPH-2003 in Example 11, pelletization was performed. Pelleted seeds were dried under low-temperature, low-humidity conditions at 15°C and then sealed. The pelleted seeds were stored under three different conditions for 3 months: (1) temperature of 5°C and humidity of 20%; (2) temperature of 15°C and humidity of 40%; and (3) alternating temperature of 20°C/30°C and humidity of 80%. The survival percentages of the strain FPH-2003 and the germination percentages of the seeds were examined at 0 months, 1 month, and 3 months of storage.

The results of Example 12 are shown in Table 16.

In the group (Example 12-1) of the pelleted lettuce seeds that had been stored at a temperature of 5°C with a humidity of 20%, the survival percentage of the strain FPH-2003 was 96% after 1 month of storage and 36% after 3 months of storage. On the other hand, in the group (Example 12-2) of the seeds that had been stored at a temperature of 15°C and a humidity of 40%, the survival percentage of the strain FPH-2003 was 30% after 1 month of storage and 0% after 3 months of storage. Furthermore in the group (Example 12-3) of the seeds that had been stored with alternating temperature of 20°C/30°C and a humidity of 80%, the survival percentage of the strain FPH-2003 was 4% after 1 month of storage and 0% after 3 months of storage. The germination percentages of the seeds were as high as 93% or more in all the groups and presented no problems. These results revealed that in the case of lettuce seeds, the survival percentage of antagonistic endophytic bacteria was increased by performing vacuum inoculation of the lettuce seeds with antagonistic endophytic bacteria, pelletization of the seeds, drying of the pellets under low-temperature, low-humidity conditions, and then storage of the pellets under low-temperature, low-humidity conditions. Thus the results also revealed that such series of steps are effective for the colonization of antagonistic endophytic bacteria in such seeds for a long time period.

Table 16

Preservation stability test for pelleted lettuce seeds after vacuum inoculation with antagonistic endophytic bacteria and subsequent drying under low-temperature, low-humidity conditions (changes in survival percentages of antagonistic endophytic bacteria and germination percentages of seeds)

| | | Survival percentage (%) of antagonistic endophytic bacterium | | | Germination percentage of seed | | |
|---|---|---|---|---|---|---|---|
| | Storage temperature -humidity | 0 months of storage | 1 month of storage | 3 months storage | 0 months of storage | 1 month of storage | 3 months of storage |
| Example 12-1 | (1) 5°C·20% | 100 | 96 | 36 | 98 | 96 | 97 |
| Example 12-2 | (2) 15°C·40% | 100 | 30 | 0 | 98 | 95 | 99 |
| Example 12-3 | (3) Alternating temperature of 20°C/ 30°C·80% | 100 | 4 | 0 | 98 | 97 | 93 |

Example 13: Effects of seeds coated with antagonistic endophytic bacteria to inhibit infection with *Olpidium brassicae,* which transmits lettuce big-vein disease

The *Pseudomonas* sp. strain FPH-2005-1 (FERM BP-10664) was used as an antagonistic endophytic bacterium. Vacuum inoculation and pelletization were performed under conditions similar to those used in Example 11, followed by drying under low-temperature, low-humidity conditions. Seeds coated with the antagonistic endophytic bacterium and general seeds (seeds not coated with the antagonistic endophytic bacterium) were each seeded in a planter (25 cm × 60 cm) packed with soil contaminated with big-vein disease and then raised within a glass green house. On day 26 after sowing, lettuce seedlings were removed and then the number of *Olpidium brassicae* zoosporangia formed in/on the root portions was determined under a biological microscope. The number of zoosporangia was examined for 5 plants per test group and perimetry involving 10 fields was performed for each plant. In the case of general seeds, 86.3 zoosporangia were infected per plant. In the case of the seeds coated with the antagonistic endophytic bacterium, 5.5 seeds were infected. Thus, the number of plants infected with *Olpidium brassicae* could be decreased to about 1/15 that of the general seeds.

The results are shown in Table 17.

Table 17

| Effects of seeds coated with an antagonistic endophytic bacterium to inhibit infection with *Olpidium brassicae* | |
|---|---|
| Seed type | Number of *Olpidium brassicae* zoosporangia (number of zoosporangia/plant) |
| Seed coated with the antagonistic endophytic bacterium | 5.5 |
| General seed (Comparative example) | 86.3 |

Example 14: Disease protection effects of seeds coated with an antagonistic endophytic bacterium against lettuce big-vein disease (in-house test)

The *Pseudomonas* sp. strain FPH-2005-1 (FERM BP-10664) was used as an antagonistic endophytic bacterium. Vacuum inoculation and pelletization were performed under conditions similar to those used in Example 11, followed by drying under low-temperature, low-humidity conditions. Seeds coated with the antagonistic endophytic bacterium and general seeds (seeds not coated with the antagonistic endophytic bacterium) were each seeded in a planter (25 cm × 60 cm) packed with soil contaminated with big-vein disease and then raised in a glass green house. Disease development was examined on days 80 and 110 after sowing. 30 plants of each seed type were examined. The percentage of disease occurrence in general seeds was 30.0% on day 80 after sowing and 100% on day 110 after sowing. In the group of the seeds coated with the antagonistic endophytic bacterium, the percentage of disease occurrance was 5.9% on day 80 after sowing, and it was 67.7% on day 110 after sowing (there values were lower than for the general seeds). It was demonstrated by these results that seeds coated with the antagonistic endophytic bacterium exerted high-level effects of suppressing the development of the lettuce big-vein disease.

The results are shown in Table 18.

Table 18

| Disease control effects of seeds coated with the antagonistic endophytic bacterium against the lettuce big-vein disease | | |
|---|---|---|
| Seed type | Percentage (%) of disease occurrence on day 80 after sowing | Percentage (%) of disease occurrence on day 110 after sowing |
| Seed coated with the antagonistic endophytic bacterium | 5.9 | 67.7 |
| General seed (Comparative example) | 30.0 | 100.0 |

Example 15: Examination of conditions for vacuum inoculation

The *Pseudomonas* sp. strain FPH-2005-1. (FERM BP-10664) was used as an antagonistic endophytic bacterium. The *Pseudomonas* sp. strain FPH-2005-1 was inoculated on a 9-cm petri dish containing King B agar medium, followed by 2 days of static culture at 25°C. The bacteria were collected using a spreader and then suspended in sterilized water supplemented with 1/5000 Tween80. Viable cell count measured by a dilution plate technique was approximately $1 \times 10^9$ cfu/ml. 20 g of lettuce seeds (variety: Logic) were wrapped with mesh and then added to a thin plastic case (that is usually used to contain strawberries for sale). A sinker was placed on the seeds so as to prevent the seeds from floating and thus to cause the seeds to sink down to the bottom and then 150 ml of a bacterial suspension was poured into the case. A vacuum inoculation method was performed using an MDA-015 pump and then conditions for vacuum inoculation were examined. After vacuum inoculation, dehydration was performed. Ventilation drying was performed at 30°C for 15 hours using a constant-temperature dryer. Bacteria in seeds were detected by the following method. 100 seeds were placed on King B agar medium supplemented with streptomycin and then cultured for 2 days at 25°C. The number of seeds from which fluorescent colonies had appeared was counted. Furthermore, the germination percentage of the seeds was confirmed as follows. 150 pelleted seeds (50 pellets $\times$ 3 times (repeated 3 times)) were placed on filter paper caused to absorb deionized water, followed by 14 days of cultivation under dark conditions at 20°C. Plants for which the presence of hypocotyls and radicles had been confirmed were counted, and then the germination percentage was measured from such number.

(Example 15-1) Examination of maximum negative pressure conditions

The maximum negative pressure conditions were varied by regulating the pressure-regulating valve of a pump MDA-15.

(Example 15-2) Examination of the time for a return to normal pressure from the maximum negative pressure

The time for a return to normal pressure was regulated via adjustment of opening and closing of an air vent.

(Example 15-3) Examination of the time for retention under maximum negative pressure

The time for retention under maximum negative pressure conditions was varied.

In Comparative example, seeds subjected to immersion treatment were used to examine percentages of bacteria detected and germination percentages.

The results are shown in Table 19. It was understood from the results for Example 15-1 that neither percentages of bacteria detected nor germination percentages were problematic within a maximum negative pressure range between 150 mmHg and 680 mmHg. It was understood from the results for Example 15-2, that neither percentages of bacteria detected nor germination percentages were problematic within a time range for a return to normal pressure from the maximum negative pressure of between 25 seconds and 50 seconds. It was understood from the results for Example 15-3 that the percentages of bacteria detected somewhat decreased when the time for retention under maximum negative pressure ranged from 1200 seconds to 3600 seconds, compared with the case of 300 seconds.

It was thus understood that within the ranges of the vacuum inoculation conditions of Example 15, lettuce seeds can be inoculated with endophytic bacteria without problems.

Table 19

Examination of conditions for vacuum inoculation

| | Test No. | Maximum negative pressure (mmHg) | Time required to reach the maximum negative pressure (second) | Time for retention under maximum negative pressure (second) | Time for return to normal pressure (second) | Percentage (%) of bacterium detected | Germination percentage (%) |
|---|---|---|---|---|---|---|---|
| Example 15-1 | 1 | 150 | 60 | 300 | 15 | 96 | 90 |
| | 2 | 400 | 60 | 300 | 25 | 96 | 93.3 |
| | 3 | 680 | 120 | 300 | 35 | 92 | 91.3 |
| Example 15-2 | 4 | 400 | 135 | 300 | 25 | 71 | 92 |
| | 5 | 400 | 120 | 300 | 50 | 83 | 90.6 |
| Example 15-3 | 6 | 400 | 135 | 300 | 25 | 71 | 92 |
| | 7 | 400 | 120 | 1200 | 25 | 33 | 94.6 |
| | 8 | 400 | 120 | 3600 | 25 | 43 | 92.6 |
| Comparative example | 9 | 0 | 0 | 0 | 0 | 84 | 94 |

Example 16: Effects of a method for inoculating lettuce seeds with an antagonistic endophytic bacterium and a drying method on the survival of the antagonistic endophytic bacterium

The strain FPH-2005-1 (FERM BP-10664) was cultured by a method similar to that used in Example 15. A test was conducted with a combination of vacuum inoculation and drying under low-temperature, low-humidity conditions similar to those used in Example 10 and inoculation via immersion and ventilation drying with heating under normal pressure conditions similar to those used in Comparative example 10.

The endophytic bacterium was detected as follows. Pelleted seeds were added to 96-well microwells and then 100 $\mu$l of king B liquid medium supplemented with streptomycin (200 ppm) and thiophamate methyl (1,000 ppm) were poured into the wells, followed by 48 hours of culture at 25°C. Pelleted seeds were exposed to ultraviolet [UV] radiation at 340 nm and then wells from which fluorescence had been emitted were counted. Fluorescence intensity was classified into three stages (+: Fluorescence was faintly observed. ++: Fluorescence was observed. +++: Strong fluorescence was confirmed). The percentage of wells for which each fluorescence intensity was observed with respect to the total number of wells was found.

The results are shown in Table 20.

Table 20

| Example | Inoculation conditions | Drying conditions | Moisture content percentage (%) | Fluorescence intensity | | | Percentage (%) of the strain detected |
|---|---|---|---|---|---|---|---|
| | | | | + | ++ | +++ | |
| Example 16-1 | Inoculation under normal pressure | Drying under low-temperature, low-humidity conditions | 2.9 | 3.1 | 96.9 | 0.0 | 100.0 |
| Example 16-2 | Inoculation under normal pressure | Drying under low-temperature, low-humidity conditions | 2.4 | 0.0 | 100.0 | 0.0 | 100.0 |
| Example 16-3 | Vacuum inoculation | Ventilation drying with heating | 1.8 | 83.3 | 0.0 | 0.0 | 83.3 |
| Example 16-4 | Vacuum inoculation | Ventilation drying with heating | 1.1 | 92.7 | 0.0 | 0.0 | 92.7 |
| Example 16-5 | Vacuum inoculation | Drying under low-temperature, low-humidity conditions | 3.0 | 1.0 | 98.0 | 1.0 | 100.0 |
| Example 16-6 | Vacuum inoculation | Drying under low-temperature, low-humidity conditions | 3.0 | 1.0 | 99.0 | 0.0 | 100.0 |
| Comparative example | Inoculation under normal pressure | Ventilation drying with heating | 1.8 | 1.0 | 0.0 | 0.0 | 1.0 |
| Comparative example | Inoculation under normal pressure | Ventilation drying with heating | 1.1 | 0.0 | 0.0 | 0.0 | 0.0 |

Differences between the inoculation method and the drying method, the moisture content percentages of the pelleted seeds, and the percentages of the strain FPH-2005-1 detected

It was confirmed according to the results in Table 20 that the endophytic bacterium strain FPH-2005-1 that had been used for inoculation of lettuce pelleted seeds via either vacuum inoculation alone or drying alone under low-temperature, low-humidity conditions or via a combination of the two was detected at high frequencies from the pelleted lettuce seeds.

Example 17: Effects of seeds coated with an antagonistic endophytic bacterium to inhibit infection with *O. brassicae* zoospores, the number of the bacterium confirmed to form colonies in the lettuce roots, and the disease severity (Pot test)

Ice cream packs each having a diameter of 15 cm were packed with soil contaminated with big-vein disease. 15 seeds coated with antagonistic endophytic bacteria were seeded per pack. On day 20 after sowing, roots were immersed in a 0.1% dipotassium hydrogen phosphate solution. Zoospores that had started to move around were measured under a microscope. Root portions were subjected to surface sterilization using ethanol and then ground. The number of antagonistic endophytic bacteria that had colonized in the roots was measured by a dilution plate technique using king B medium supplemented with streptomycin (200 ppm). On day 40 after sowing, the disease severity (development of big vein symptoms) was examined. The results are shown in Table 21. Colonization of the antagonistic endophytic bacterium in the lettuce root portions was confirmed. When seeds coated with the antagonistic endophytic bacterium were used, the number of zoospores released from the root portions was 0.5 compared with 5.1 of the untreated group. That is, the number of zoospores released in the case of the coated seeds decreased to approximately 1/10 of that in the case of the untreated group. Hence, inhibited infection with zoospores was confirmed in the case of the coated seeds. The percentage of diseased plants was 14.3% when seeds coated with the antagonistic endophytic bacterium had been used. Such percentage was clearly lower than 70.0% in the case of the untreated group. It was thus confirmed that the coated seeds had effects of suppressing disease occurrence.

Table 21

| Effects of seeds coated with antagonistic endophytic bacteria to inhibit infection with *O. brassicae* zoospores, the numbers of the bacteria that had colonized in lettuce roots, and the disease severity | | | |
|---|---|---|---|
| | Number of bacteria that colonized in root portions ($10^4$ cfu/g of roots) | Number of zoospores ($10^4$ zoospores/ml) | Percentage (%) of diseased plants |
| Seeds coated with antagonistic endophytic bacteria | 3.0 | 0.5 | 14.3 |
| Seeds not coated with such bacteria | - | 5.1 | 70.0 |

Example 18: Disease control effects of seeds coated with an antagonistic endophytic bacterium against lettuce big-vein disease (on-site agricultural field test)

The *Pseudomonas* sp. strain FPH-2005-1 (FERM BP-10664) was used as an antagonistic endophytic bacterium. Vacuum inoculation and pelletization were performed under conditions similar to those used in Example 10, followed by drying under low-temperature, low-humidity conditions. Seeds coated with the antagonistic endophytic bacterium were seeded in 200-well cell trays packed with soil for cultivation. After raising of seedling according to custom and practices, the seedlings were finally transplanted in the agricultural field (on-site) of Amashioya-machi, Nandan-cho, Awajishima, Hyogo prefecture, Japan. Disease control effects were examined as follows: (1) final transplantation in late September - examination in mid-November; (2) final transplantation in late October - examination in December; and (3) final transplantation in late November - examination in March. The tests were repeated 3 times for 20 plants each of (1), (2), and (3). That is, the number of plants examined for each of (1), (2), and (3) was 20 plants.

The following disease indices were used for examination of disease occurrence: 0: No symptoms were confirmed; 1: Big vein symptoms were observed but no effects on head formation were confirmed; 2: Big vein symptoms were observed, but shipment of small-size lettuce plants was possible; 3: Big vein symptoms were observed, but head formation was observed; and shipment thereof was impossible; and 4: Big vein symptoms were observed but no head formation took place.

Disease severity, protection value, percentage of product commercialization were calculated by the following formula.

$$\text{Disease severity} = [(\text{Disease index} \times \text{Number of plants with each index}) \times 100]/[4 \times \text{Total number of plants examined}]$$

$$\text{Protection value} = 100 - [\text{Disease severity in treated group}/ \text{Disease severity in untreated group} \times 100]$$

Percentage of product commercialization = [(Number of plants with indices between 0 and 2) × 100]/Total number of plants examined

The results are shown in Table 22. In (1), the test was conducted under conditions of low-level disease development and the resulting protection value was 45.8. In (2), the test was conducted under conditions of moderate-level disease occurrence and the resulting protection value was 41.0. In (3), the test was conducted under conditions of significant-level disease occurrence and 100% of the plants tested were found to be diseased in both treated and untreated groups. However, the disease severity was suppressed at low levels in the groups using seeds coated with the antagonistic endophytic bacterium. Percentage of product commercialization was 98.9% in the groups using the coated seeds compared with 81.0% in the untreated group. Hence, damage due to the big-vein disease could be avoided in the groups of the coated seeds.

Table 22

| Disease control effects of seeds coated with the antagonistic endophytic bacterium against lettuce big-vein disease | | | | | |
|---|---|---|---|---|---|
| Cropping type | Treatment | Percentage of diseased plants | Disease severity | Protection value | Percentage of product commercializatio n |
| (1) Final transplantation in late September - examination in mid-November (Conditions of low-level disease occurrance) | Seed coated with the antagonistic endophytic bacterium | 2.6 | 0.7 | 45.8 | 100 |
| | Untreated seeds | 4.8 | 1.2 | | 100 |
| (2) Final transplantation in late October - examination in December (Conditions of medium-level disease occurrance) | Seed coated with the antagonistic endophytic bacterium | 38.3 | 9.6 | 41.1 | 100 |
| | Untreated seeds | 65.0 | 16.3 | | 100 |
| (3) Final transplantation in late November - examination in March (Conditions of significant-level disease occurrance) | Seed coated with the antagonistic endophytic bacterium | 100 | 29.3 | 37.8 | 98.9 |
| | Untreated seeds | 100 | 43.6 | | 81.0 |

It was clear based on the above results that the survival percentage of the antagonistic endophytic bacterium used for inoculation of lettuce seeds can be significantly elevated by either a method that comprises vacuum inoculating lettuce seeds with the antagonistic endophytic bacterium or a method that comprises inoculating lettuce seeds with the antagonistic endophytic bacterium followed by drying under low-temperature, low-humidity conditions, or a combination of these methods. Furthermore, lettuce seeds coated with the antagonistic endophytic bacterium, which had been prepared based on the present invention, exerted high protection values against lettuce big-vein disease injuries. The use of the present invention makes it possible to conveniently provide lettuce seeds having high disease control effects against lettuce big-vein disease and high preservation stability at low cost.

All publications, patents, and patent applications cited herein are incorporated herein by reference in their entirety.

**Claims**

1. A method for producing a seed coated with an antagonistic microorganism, in which a seed is vacuum-inoculated with an antagonistic microorganism.

2. The method according to claim 1, in which after vacuum-inoculation of the seed with the antagonistic microorganism, the seed is dried under low-temperature, low-humidity conditions.

3. A method for producing a seed coated with an antagonistic microorganism, comprising inoculating a seed with an antagonistic microorganism and then drying the seed under low-temperature, low-humidity conditions after inoculation.

4. A seed coated with an antagonistic microorganism produced by the method according to any one of claims 1 to 3.

5. A disease control method for a crop, in which a crop seed is vacuum-inoculated with an antagonistic microorganism.

6. The method according to claim 5, in which, after vacuum inoculation of the crop seed with the antagonistic microorganism, the crop seed is dried under low-temperature, low-humidity conditions.

7. A disease control method for a crop, comprising inoculating a crop seed with an antagonistic microorganism and then drying the seed under low-temperature, low-humidity conditions after inoculation.

8. The method according to any one of claims 5 to 7, further comprising storing the crop seed inoculated with the antagonistic microorganism under low-temperature, low-humidity conditions during a period ranging from completion of drying to sowing.

**INTERNATIONAL SEARCH REPORT**

| International application No. |
| --- |
| PCT/JP2006/318337 |

A. CLASSIFICATION OF SUBJECT MATTER
*A01N25/00*(2006.01)i, *A01C1/06*(2006.01)i, *A01N63/00*(2006.01)i

According to International Patent Classification (IPC) or to both national classification and IPC

B. FIELDS SEARCHED

Minimum documentation searched (classification system followed by classification symbols)
A01N25/00, A01C1/06, A01N63/00

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)
CAplus(STN)

C. DOCUMENTS CONSIDERED TO BE RELEVANT

| Category* | Citation of document, with indication, where appropriate, of the relevant passages | Relevant to claim No. |
| --- | --- | --- |
| X | JP 3-501800 A (Crop Genetics International Corp.),<br>25 April, 1991 (25.04.91),<br>Full text<br>& WO 88/09114 A1          & AU 8818075 A<br>& ZA 8803556 A          & EP 358718 A<br>& IL 86466 A          & US 5415672 A | 1-8 |
| A | JP 2003-40720 A (Tokachi Nogyo Kyodo Kumiai Rengokai),<br>13 February, 2003 (13.02.03),<br>(Family: none) | 1-8 |
| A | JP 10-218715 A (Idemitsu Kosan Co., Ltd.),<br>18 August, 1998 (18.08.98),<br>(Family: none) | 1-8 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 November, 2006 (13.11.06) | 21 November, 2006 (21.11.06) |

| Name and mailing address of the ISA/<br>Japanese Patent Office | Authorized officer |
| --- | --- |
| Facsimile No. | Telephone No. |

Form PCT/ISA/210 (second sheet) (April 2005)

## INTERNATIONAL SEARCH REPORT

| International application No. |
| --- |
| PCT/JP2006/318337 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

```
   The invention as claimed in claim 1 relates to a method of producing a
seed coated with an antagonistic microorganism which comprises inoculation
under reduced pressure, while the invention as claimed in claim 7 relates
to a method of protecting a crop from a disease without resorting to inoculation
under reduced pressure.  The technical matter common to the inventions as
claimed in these claims, which is inoculating a seed with an antagonistic
microorganism, has been publicly known as described in the document cited
in page 2, column C.  Also, penetration in vacuo is described in this document.
Such being the case, it does not appear that there is a technical (continued
to extra sheet)
```

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

Form PCT/ISA/210 (continuation of first sheet (2)) (April 2005)

| INTERNATIONAL SEARCH REPORT | International application No. |
|---|---|
| | PCT/JP2006/318337 |

Continuation of Box No.III of continuation of first sheet(2)

relationship between the invention as claimed in claim 1 and the invention as claimed in claim 7 involving one or more of the same or corresponding special technical features and, therefore, the present application lacks unity of invention.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9308372 A
- JP 1997 A
- JP 11335217 A
- JP 1999 A
- JP 10203917 A
- JP 1998 A
- JP 11004606 A
- JP 2001346407 A
- JP 2002003322 A
- JP 2885805 B
- JP 2003034607 A
- JP 8268826 A
- JP 7163334 A
- JP 2005270616 A
- JP 2005271020 A
- JP 3140430 B
- JP 3554592 B
- JP 2884487 B
- JP 3629212 B
- JP 3046167 B
- JP 11253151 A
- JP 3040322 B

**Non-patent literature cited in the description**

- Frontiers of Research. Softscience Ltd, 2000
- *Annual Review of Phytopathology,* 1993, vol. 31, 53-80
- *Annals of the Phytopathological Society of Japan,* vol. 68 (2), 240
- Preservation Method and Nodulation of Seeds Coated (Inoculated) with Alfalfa Root Nodule Bacteria. *Grassland Science, The Japanese Society of Grassland Science,* vol. 42 (1), 7-12
- The Japanese Society of Grassland Science. *Grassland Science,* vol. 44 (1), 1-6
- Nodule Occupancies by Inoculum Strains Used for Lime-Coating and Vacuum Processing Inoculations of Red Clover (Trifolium pratense L.) Seeds. *Grassland Science, The Japanese Society of Grassland Science,* vol. 44 (1), 1-6
- the Frontiers of Research. Use of Microorganisms as Materials. Softscience Ltd, 2000
- *Gekkan Gendai Nogyo,* 2003, 155-159
- *Method for Studying Plant Pathogenic Microorganisms,* 1993
- *The Phytopathological Society of Japan,* vol. 68 (2), 240
- New Edition Experimental Protocols for Soil Microorganisms. YOKENDO, 1997